# EUROPÄISCHE PATENTSCHRIFT

(11) **EP 3 846 983 B1**
(45) Veröffentlichungstag und Bekanntmachung des Hinweises auf die Patenterteilung: **15.01.2025**
(21) Anmeldenummer: 19774055.8
(22) Anmeldetag: 03.09.2019
(51) Int. Cl.: B25J 15/02, B25J 15/10

(54) **MULTIFUNKTIONALER LANGARM-GREIFMECHANISMUS**
MULTI-FUNCTIONAL LONG ARM GRIPPING MECHANISM
MÉCANISME DE PRÉHENSION À BRAS LONG MULTIFONCTIONNEL

(30) Priorität: 04.09.2018 DE 102018006991
(43) Veröffentlichungstag der Anmeldung: 14.07.2021
(73) Patentinhaber: Kimiya GmbH, 59494 Soest (DE)
(72) Erfinder: SAADAT, Mohammad Mohsen, 59494 Soest (DE); JÜRGENS, Ingo, 59581 Warstein (DE)
(74) Vertreter: BSB Patentanwälte Schütte & Engelen Partnerschaft mbB
(86) Internationale Anmeldenummer: PCT/EP2019/073471
(87) Internationale Veröffentlichungsnummer: WO 2020/048985

(56) Entgegenhaltungen:
- DE-A1- 102016 010 190
- GMG GESELLSCHAFT FÜR MODULARE GREIFERSYSTEME MBH: "Modularer Langarmgreifer", 18 February 2019 (2019-02-18), D-59494 Soest, XP055647961, Retrieved from the Internet <URL:http://www.gmg-system.com/media/i105_technisches_datenblatt.pdf> [retrieved on 20191129]
- GMG GESELLSCHAFT FÜR MODULARE GREIFERSYSTEME: "Langarmgreifer I 105", YOUTUBE, 20 December 2018 (2018-12-20), pages 2 pp., XP054980048, Retrieved from the Internet <URL:https://www.youtube.com/watch?v=dITKkOq6PW4&feature=emb_title> [retrieved on 20191213]

## Beschreibung

Die Erfindung betrifft einen multifunktionalen langarmigen Greifmechanismus für Roboter, Maschinen und Handhabungsgeräte mit wenigstens einem beweglichen Greiferfinger, der mit einem anderen feststehenden oder beweglichen Greiferfinger zusammenwirkt. Ein solcher Greifmechanismus ist in Dokument DE102016010190A1 offenbart.

Der Greifer bildet im zusammengefahrenen Zustand einen schmalen zylinder- oder mehreckförmigen langen Körper, der über seine gesamte Länge, die auch mehrere Meter betragen kann, tief in hohlen Räumen eintaucht, Objekte und Werkstücke einzeln oder mehrfach greifet, von A nach B transportiert und einzeln oder gemeinsam absetzt. Somit kann er auch tief in die Ecken von Kisten greifen und von dort Teile herausholen oder Teile dorthin platzieren, ohne die Kistenwand zu berühren. Durch seine Multifunktionalität kann der Greifer mit mehreren Finger- , Saug- und Magnetkopfmechanismen versehen sein, um mehrere Aufgaben gleichzeitig oder nacheinander auszuführen.

Es gibt zahlreiche Greifmechanismen, die universell einsetzbar sind und es gibt auch zahlreiche Greifmechanismen für spezielle Aufgaben. Wenn es jedoch darum geht, industriell gefertigte Produkte bei ihren Fertigungs-, Transport- und Lagerungsprozessen dicht nebeneinander in tiefen Kisten oder übereinander zu platzieren und später die dicht aneinander liegenden Teile aus tiefen Transportkisten einzeln herauszunehmen, sind diese Greifmechanismen nicht oder nicht gut geeignet, da sie mit ihrem Gehäuse oder ihren Fingern an das benachbarte Teil oder an die Wandung der Kisten anstoßen.

DE 10 2016 220 643 A1 zeigt einen gattungsgleichen Robotergreifer (1) mit einem Greifergrundkörper (2), an dem mindestens eine radial bewegliche Greiferbacke (10) und ein Hilfssaugelement (13) befestigt sind. Der Greifer besitzt ein zentrales Saugelement (8), das am Ende einer rohrförmigen und höhenverstellbaren Säule (17) angebracht ist. Die Antriebe (14, 15) sind an einer Platte befestigt, die mit Hilfe von drei seitlich platzierten Vierkantstäben mit dem Grundkörper (2) befestigt sind und einen Käfig bilden. Innerhalb dieses Käfigs befinden sich nicht näher beschriebene Führungsstangen, auf denen sich eine Platte auf und ab gleitet und als Antrieb der Greifarme dient. Dieser Robotergreifer wird mittels eines nicht näher beschriebenen schmalen Verbindungselementes am Greiferflansch (3) befestigt. Das gesamte Gewicht, Biege- und Torsionsmoment des Robotergreifers mit seinem gegriffenen Objekt kommen auf das nicht näher beschriebene schmale Verbindungselement zwischen dem Greifergrundkörper (2) und dem Greiferflansch (3). Des Weiteren ragen die drei Greifarme (9.1, 9.2, 9.3) im oberen Bereich stets in jeder Position radial nach außen und bleiben immer in einem großen Durchmesser weit außerhalb des käfigartigen Gebildes, selbst dann, wenn sie sehr kleine Objekte greifen.

CN 106 003 112 A beschreibt einen Greifmechanismus mit einem sehr großen Greiferhub. Die hierbei verwendeten Getriebe basieren auf Mechanismen wie das Scherengelenk und das gleichschenklige zentrische Schubkurbelgetriebe mit einer zentralen Schubstange (1), die als Gestell der Mechanismen dient und mit dem Flansch verbunden ist. Dadurch bestimmt diese einzige schwache Verbindung die Tragfähigkeit des großen Greifers, die in Bezug auf Biegung und Torsion sehr schwach ausfällt.

US 2017/0 151 678 A1 beschreibt einen Greifmechanismus mit bis zu vier Greiferfingern am Ende von drei übereinander angeordneten Teilen, die aus dem Vollen massiv hergestellt sind. Dieser Greifmechanismus baut auf einem Schaft zur Befestigung an einer Maschine und wird bis zur Greiferspitze immer breiter und schwerer. Er ist daher völlig ungeeignet für besonders lange, biege- und torsionssteife Greifmechanismen.

DE 10 2009 015 977 A1 beschreibt einen Roboterarm bestehend aus drei biegsamen Stangen, in deren Längenverlauf sich etagenweise dreieckförmige Stangen befinden, die die biegsamen Stangen auf Distanz halten. Durch das Verkürzen der Länge einzelner biegsamer Stangen neigt sich ein Greiferflansch und mit ihm ein Greifer an der Spitze der biegsamen Stangen auf einer räumlich gekrümmten Oberfläche. Dieser Roboterarm ist sehr torsionsweich.

Der Erfindung liegt die Aufgabe zugrunde, einen multifunktionalen Greifmechanismus mit einem besonders langen Arm und großen Greiferhub derart zu kreieren, dass er im zusammengefahrenen Zustand sehr schlank und schmal baut und trotzdem biege- und torsionssteif bleibt.

Diese Aufgabe wird erfindungsgemäß mit den in Anspruch 1 angegebenen Merkmalen gelöst.

Die Unteransprüche stellen vorteilhafte Weiterbildungen der Erfindung dar.

Der erfindungsgemäße Greifmechanismus ist für Roboter, Maschinen und Handhabungsgeräte vorgesehen und weist einen (insbesondere langen) Arm und wenigstens einem beweglichen Greiferfinger auf, der mit einem anderen feststehenden oder beweglichen Greiferfinger zusammenwirkt. Das Gehäuse des Greifmechanismus setzt sich in Form eines (insbesondere schlanken und) mehrstöckigen Turmes in Sandwichbauweise aus mindestens zwei über dem Greiferflansch aufbauenden Käfigen (I, II) mit zwei feststehenden Käfigplatten zusammen, die durch Stangen, Speichen, Seile und/oder Drähte auf Distanz gehalten werden. Die Aktuatoren und (besonders bevorzugt) alle beweglichen Teile des Greifers befinden sich im eingefahrenen Zustand vorzugsweise wenigstens im Wesentlichen größtenteils und insbesondere nahezu vollständig oder vollständig innerhalb der Käfige.

Dabei umfasst der Arm bzw. lange Arm des Greifermechanismus das Gehäuse in Form des insbesondere schlanken Turmes bzw. der Arm wird durch Gehäuse wenigstens teilweise und insbesondere vollständig zur Verfügung gestellt. Dieser Turm wird vorzugsweise auch Greiferturm genannt.

Unter dem Begriff "schlanker" Turm wird im Sinne der Anmeldung eine turmartige Struktur verstanden, bei der ein Verhältnis einer maximalen Längsabmessung bzw. Höhe zu einem Durchmesser in wenigstens einem bestimmungsgemäßen Zustand größer ist als 2:1 und insbesondere größer oder gleich 3:1 und Werte von 4:1 erreichen und auch überschreiten kann. Besonders bevorzugt ist das Verhältnis größer als 2,5:1.

Größtenteils innerhalb der Käfige befinden sich alle beweglichen Teile und Aktuatoren dann, wenn sie sich in wenigstens einer bestimmungsgemäß zur Verfügung stehenden Position zu mehr als 50% und insbesondere mehr als 60% und vorzugsweise mehr als 70% oder 80% in den Käfigen befinden. Es ist auch möglich und bevorzugt, dass sich alle beweglichen Teile und Aktuatoren zu mehr als 90% und insbesondere mehr als 95% oder nahezu oder sogar 100% innerhalb der Käfige befinden.

Ein Teil oder Aktuator befindet sich dabei im Sinne der vorliegenden Anmeldung insbesondere dann innerhalb eines Käfigs, wenn sich das Teil oder Aktuator innerhalb eines durch die Elemente des Käfigs (möglichst eng) aufgespannten zylindrischen oder auch ovalen oder mehreckigen Käfigvolumens befindet.

In einfachster Ausführung besitzt der erfindungsgemäße Greifmechanismus einen langen Arm als Gehäuse in Form eines schlanken Turmes, Greiferturm genannt, der aus mindestens einem Flansch und weiteren zwei über dem Flansch angeordneten Ebenen, Käfigplatten genannt, besteht, die jeweils miteinander und mit dem Flansch einen biege- und torsionssteifen Käfig bilden. Die Aufzählung der Käfigplatten beginnt mit der ersten Käfigplatte nach der Flanschplatte. An der Flanschplatte sind mehrere Stangen, Speichen, Seile oder Drähte an einem Ende befestigt. Das andere Ende ist an einer zweiten Platte befestigt, die mit einem Abstand parallel zur Flanschplatte angeordnet ist. Die Flanschplatte bildet mit der zweiten Platte und den dazwischen liegenden parallelen und/oder sich kreuzenden Stangen, Speichen, Seilen oder Drähten einen leichten, biege- und torsionssteifen Käfig, den Flanschkäfig. Der Hohlraum des Flanschkäfigs dient in erster Linie als Platz zur Unterbringung von Aktuatoren, Mechanismen und anderen Elementen und Komponenten sowie den Modulen der Elektronik und der Steuerung des Greifers. Der Flanschkäfig kann auch als Verlängerung des Armes dienen.

Die Schnittstellen zur Versorgung des Armes mit Energie, Stoff und Signal befinden sich in Form von Steckern und Kupplungen an der Flanschplatte, vorzugsweise am Umfang des runden Flansches oder nahe der Flanschplatte oder durch die Flanschplatte hindurch.

Die Körper bzw. Gehäuse der Aktuatoren, Elektromotoren, Pneumatikzylinder oder andere Antriebsarten und die der anderen Maschinenelemente werden in einem oder in mehreren Käfigen zwischen deren Käfigplatten angebracht, die ihrerseits den Greiferturm und somit den gesamten Greiferarm versteifen. Es gibt zweierlei Käfigplatten und Käfige, feststehende und bewegliche. Beide Käfigarten besitzen Käfigplatten und Käfigstangen. Sowohl die feststehenden als auch die beweglichen Käfigplatten halten die Stangen des langen Armes seitlich auf Distanz. Sie verstärken die Stangen gegen Biegung und versteifen sie gegen Knickung und Torsion.

Die Käfigplatten können einseitig oder beidseitig mit den Stangen, Speichen, Seiten etc. befestigt sein. Die Maschinenelemente und Aktuatoren zwischen den Käfigplatten können auf Druck beansprucht werden, um die Stangen, Speichen, Seile, Drähte und Fäden auf Zug zu spannen. Alternativ werden zwischen den Käfigplatten einzelner Käfige Stangen oder Rohre, vorzugsweise geteilte, platziert, die mittels einer Schraubverbindung auseinander gedrückt werden, um die äußeren Stangen, Drähte, Seile oder Fäden auf Zug vorzuspannen.

Die Stangen der Käfige dienen in der Regel auch als Führungsstangen der Schubgelenke zwischen den beweglichen Käfigplatten und feststehenden Käfigstangen und der Schubgelenke zwischen den feststehenden Käfigplatten und den beweglichen Käfigstangen. Die beweglichen Käfigstangen können auch durch die unbeweglichen Käfigplatten hindurch ragen und mit denen ein Schubgelenk bilden. Alle Stangen können rohrförmig hohl sein.

Alle Käfigplatten, feststehende und bewegliche, können Befestigungselemente für Gelenke beinhalten. Das bedeutet, dass an den Käfigplatten sowohl Aktuatoren fest oder beweglich angebracht werden können als auch Gelenke anderer Mechanismen, die sich am multifunktionalen Langarm-Greifmechanismus befinden. Ganze oder Teile der beweglichen Käfige dienen als Antrieb oder Antriebsglied zur Betätigung einzelner oder Gruppen von Finger- und andere Mechanismen.

Die Käfigplatten sind rund oder mehreckig mit radialen Aussparungen wabenförmig sehr leicht gestaltet. Sie besitzen nur so viel Material, wie dies erforderlich ist, um die feststehenden Führungsstangen und die Gleitlager für durchgehende Führungsstangen zu halten oder zu klemmen. Ihre äußeren Konturen können beliebige geometrische Formen wie kreis- oder mehreckförmig annehmen. Das Zentrum des Greiferturmes und der einzelnen Käfige bleibt zwecks Platzierung von Versorgungsleitungen, Fingermechanismen oder anderen Mechanismen in der Regel frei von Stangen und Speichen. Die Stangen und Speichen werden vorzugsweise vom äußersten Rand des Greiferturmes radial nach innen platziert.

Je nach Aufgabe und Bedarf wird durch das Aufeinandersetzen einer beliebigen Anzahl von Käfigen in Sandwichbauweise ein beliebig langer und schmaler, sehr leichter, jedoch biege- und torsionssteifer Turm als ein hohler Arm und als Gestell eines multifunktionalen Greifmechanismus aufgebaut. Vorzugsweise nimmt der Umfang der einzelnen Käfigplatten mit zunehmender Entfernung von der Flanschplatte kegelförmig ab. Ein derart konzipierter Greifmechanismus kann seine Greiferfinger, Saug-, Magnetkopf- und andere Mechanismen samt deren Aktuatoren im zusammengefahrenen Zustand komplett innerhalb seines Greiferturmes platzieren, in die Ecken von Kisten und in Hohlräumen von Werkstücken tief eintauchen, Teile Greifen, Arbeit verrichten und wieder herausfahren.

Die Aktuatoren, die Kräfte und Momente erzeugen und andere schwere Teile werden in den ersten Käfigen näher zum Flansch untergebracht. Die Teile der Mechanismen, die Kräfte übertragen und/oder führende Aufgaben übernehmen wie Lenker und Kurbeln sind in der Regel innerhalb der vom Flansch weiterliegenden Käfige an den beweglichen und unbeweglichen Käfigplatten befestigt oder angelenkt und erfüllen ihre Funktion und Aufgabe durch die Hohlräume zwischen den Stangen, Drähten, Seilen und Fäden hindurch nach außerhalb des Greiferturmes.

Die beweglichen Käfigplatten und ganze Käfige oder auf den Führungsstangen einseitig geführte Antriebs- oder Synchronisationsringe werden durch die im Flanschkäfig oder in den anderen Käfigen platzierten Aktuatoren mechanisch mittels Wellen, Stangen, Seile, Spindeln, Ketten, Riemen, Fäden, Federn, Gasfedern u. dgl. Antriebselemente, auch durch Bohrungen durch dazwischen liegende Käfigplatten hindurch betätigt.

Die axiale Bewegung oder die Schraubbewegung einer beweglichen Käfigplatte oder eines Ringes auf parallelen Stangen oder Drähten entlang der Greiferlängsachse (A) dient als Antrieb und/oder Synchronisation der an der Greiferfunktion beteiligten Mechanismen und anderer beweglichen Komponenten.

Je nach Aufgabe werden von einem Mechanismus bis zu mehreren Mechanismen um den so konzipierten Greiferturm in unterschiedlichen Höhen platziert und einzeln oder in Gruppen betätigt, um unterschiedliche Aufgaben nacheinander oder gleichzeitig durchzuführen. Die Mechanismen können aus einfachen viergliedrigen kinematischen Ketten bis hin zu mehrgliedrigen kinematischen Ketten mit mehreren An- und Abtriebsgliedern bestehen.

Beispielsweise können drei synchron betätigte Fingermechanismen ein Objekt innen oder außen greifen und handhaben, während drei Saugmechanismen sich im eingefahrenen Zustand in der Warteposition befinden. Nach dem Absetzen einer kompletten Lage von Teilen fahren die Fingermechanismen komplett in den Greiferturm hinein und die drei Saugmechanismen fahren aus dem Greiferturm heraus, saugen eine Lage Pappe und setzen diese als Zwischen- oder Trennlage auf die bereits platzierte Lage von Teilen ab. In einem anderen Fall nimmt der Greifer mit drei Fingermechanismen ein erstes Teil und fährt mithilfe des Roboters auf das zweite, ein völlig anderes Teil, oder auf eine Zwischenlage und greift mit der zweiten Gruppe von Finger- oder Saugmechanismen das zweite Teil oder die Zwischenlage. Anschließend werden beide Teile zusammen oder nacheinander an ihrem Bestimmungsort abgesetzt.

Für Anwendungen, bei denen auf den Greifer eine große seitliche Kraft oder Torsion wirkt oder der Greifmechanismus komplett abgedichtet sein muss wird der so konzipierte Greifmechanismus im zusammengefahrenen Zustand in ein Rohr gesteckt, das in etwa den Außendurchmesser der Flanschplatte besitzt. Das Rohr wird an einem Absatz an der Flanschplatte orientierungsgerecht befestigt. Auf der Außenmantelfläche besitzt das Rohr an den Stellen, wo die Greiferfinger, Saunapf-, Magnetkopf- und andere Mechanismen herauskommen, entsprechende Fenster, Aussparungen und Schlitze. Ein Deckel, der vorzugsweise kegelförmig ist, schließt die offene Stirnseite des Rohres und hält die letzte Käfigplatte durch einen Absatz oder eines Konus seitlich fest. Damit wird der Langarm-Greifmechanismus derart biege- und torsionsstabil, dass er auch für horizontale Anwendungen geeignet ist. Ein elastischer Überzug deckt als Mantel das ganze Rohr von der Spitze bis zum Flansch ab und macht den Langarm-Greifmechanismus Gas-, Wasser- und chemikaliendicht.

Im Einzelnen zeigen:

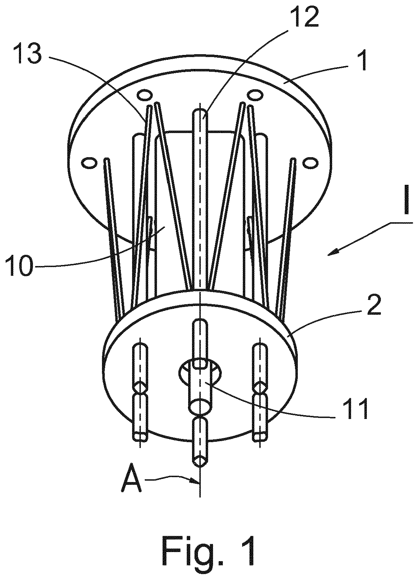

- Fig. 1: schematische Darstellung eines Flanschkäfigs bestehend aus einer runden Flanschplatte, einer dazu parallel angeordneten zweiten runden Käfigplatte, einem zwischen den beiden Platten eingespannten Aktuator als Antriebseinheit, die durch senkrecht auf die Käfigplatten stehenden parallel zu einander verlaufenden Stangen und schräg verlaufenden Drähten, Speichen, Seilen oder Fäden auf Druck beansprucht wird.

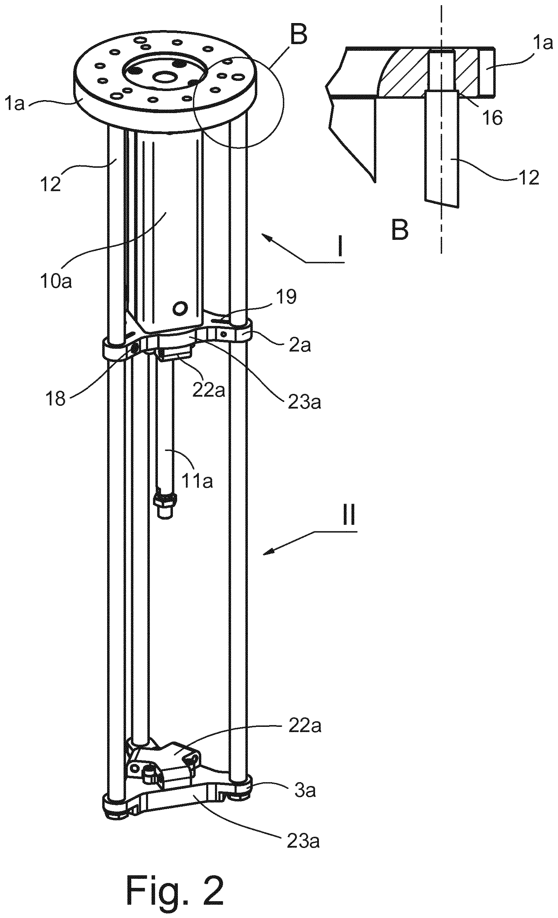

- Fig. 2: das Gestell des Langarm-Greifmechanismus als ein Greiferturm bestehend aus einer runden Flanschplatte, zwei dreieckförmigen feststehenden Käfigplatten und drei durchgehenden Führungsstangen. Der Flanschkäfig (I) beherbergt einen Aktuator, dessen Antriebsstange oder Antriebswelle sich im zweiten Käfig (II) befindet.

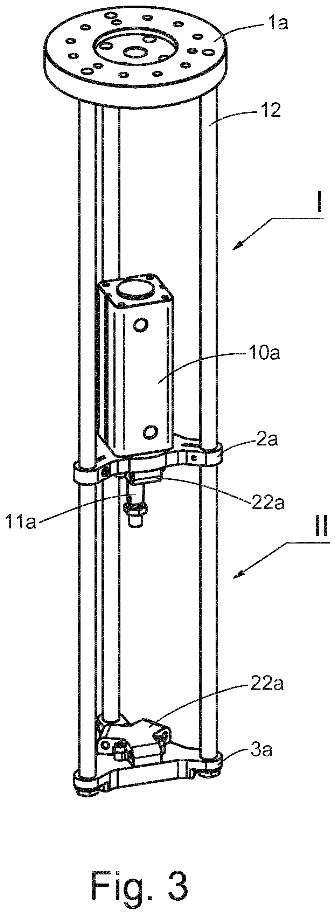

- Fig. 3: das Gestell des Langarm-Greifmechanismus als ein Greiferturm bestehend aus einer runden Flanschplatte und zwei dreieckförmigen Käfigen. Der Aktuator ist an der feststehenden Käfigplatte am nächsten zum Flansch befestigt.

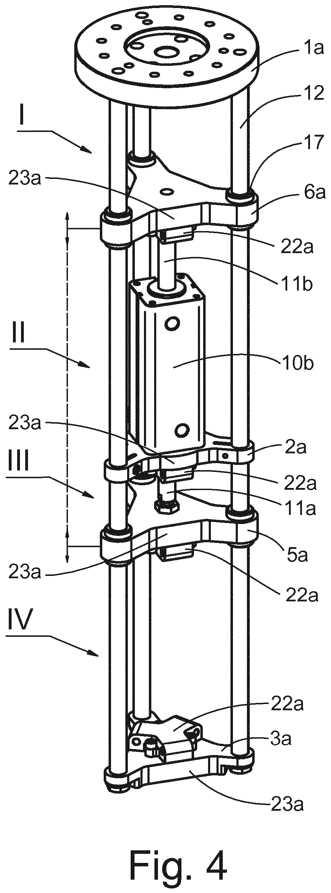

- Fig. 4: das Gestell des Langarm-Greifmechanismus als ein Greiferturm bestehend aus einer runden Flanschplatte und vier dreieckförmigen Käfigen. Von den dreieckförmigen Käfigplatten sind zwei feststehend und zwei auf den Führungsstangen beweglich. Der Aktuator sitzt an der zweiten Käfigplatte fest, verbindet und bewegt mit seiner durchgehenden Antriebsstange bzw. Antriebswelle die erste und die dritte Käfigplatte miteinander.

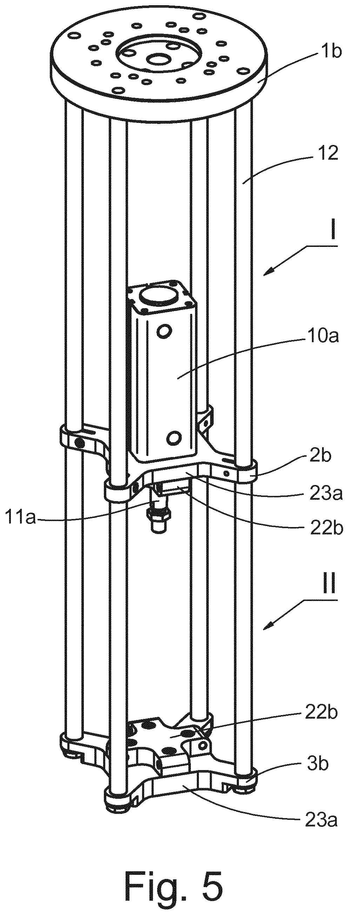

- Fig.5: das Gestell des Langarm-Greifmechanismus als ein Greiferturm bestehend aus einer runden Flanschplatte und zwei viereckförmigen Käfigen mit vier Führungsstangen. Der Aktuator ist an der feststehenden Käfigplatte am nächsten zum Flansch befestigt.

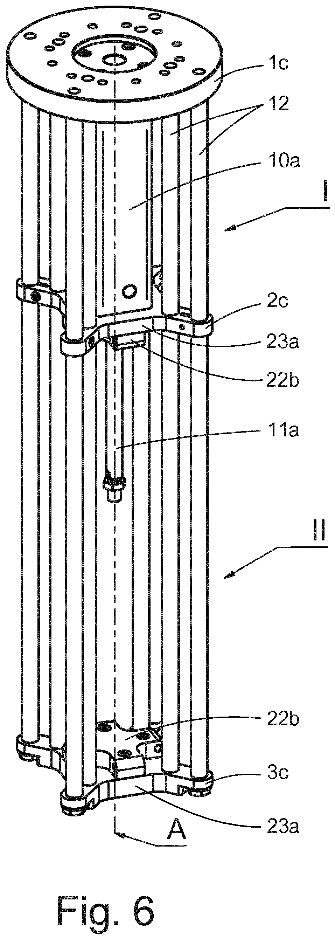

- Fig. 6: das Gestell des Langarm-Greifmechanismus als ein Greiferturm bestehend aus einer runden Flanschplatte und zwei viereckförmigen Käfigen mit vier Doppelstangen. Der Aktuator bildet mit dem Flansch und der ersten Käfigplatte einen sehr stabilen Flanschkäfig.

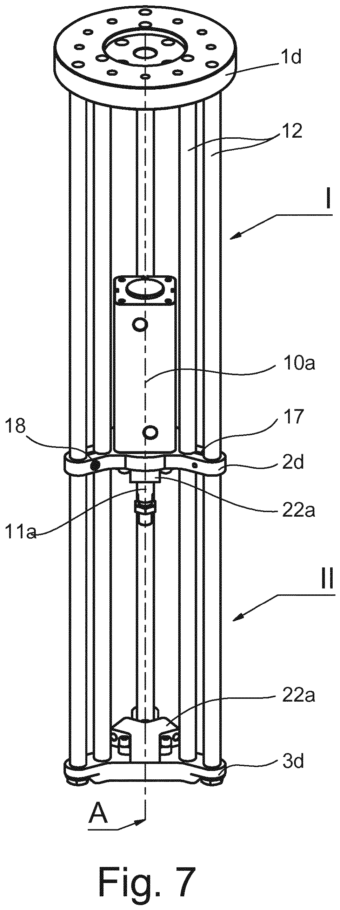

- Fig. 7: das Gestell des Langarm-Greifmechanismus als ein Greiferturm bestehend aus einer runden Flanschplatte und zwei dreieckförmigen Käfigen mit dreimal radial angeordneten Doppelstangen. Der Aktuator ist an der feststehenden Käfigplatte am nächsten zum Flansch befestigt.

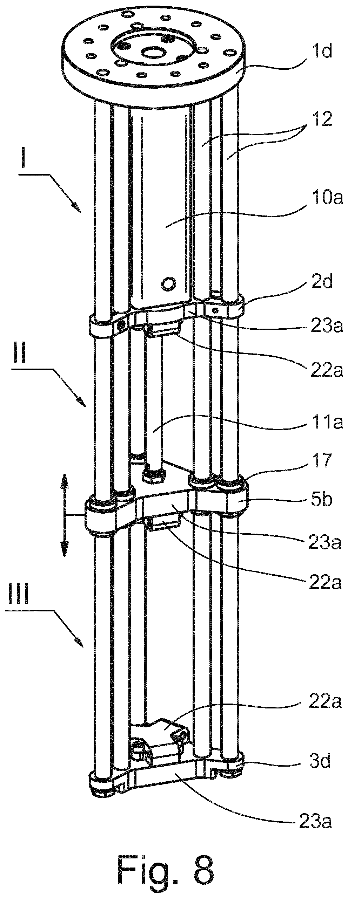

- Fig. 8: das Gestell des Langarm-Greifmechanismus als ein Greiferturm bestehend aus einer runden Flanschplatte, drei dreieckförmigen Käfigen mit dreimal dreieckförmig und radial angeordneten Doppelstangen. Der Aktuator bildet mit der ersten Käfigplatte einen Flanschkäfig. Die Antriebsstange bzw. die Antriebswelle des Aktuators betätigt die mittlere Käfigplatte, die durch Linearlager auf den Führungsstangen axial verschiebbar gelagert ist.

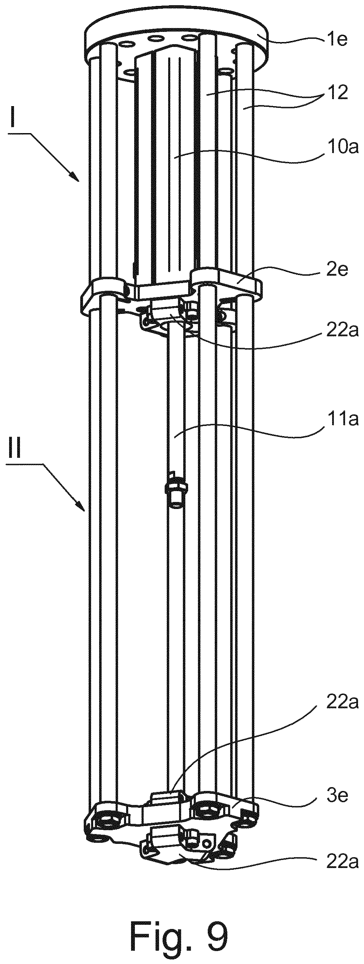

- Fig. 9: das Gestell des Langarm-Greifmechanismus als ein Greiferturm bestehend aus einer runden Flanschplatte, zwei mit Doppelecken dreipassförmig feststehenden Käfigplatten und sechs durchgehenden Führungsstangen. Der Flanschkäfig beherbergt einen Aktuator, dessen Antriebsstange oder -welle sich im zweiten Käfig befindet.

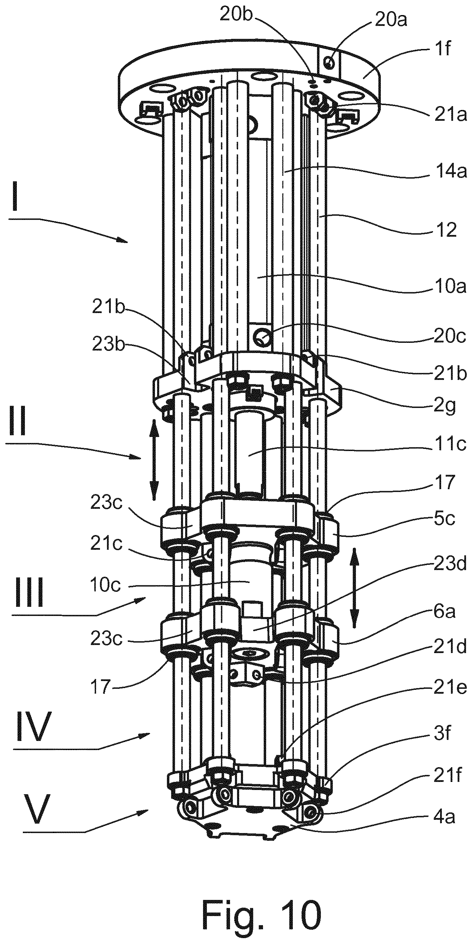

- Fig. 10: das Gestell des Langarm-Greifmechanismus als ein Greiferturm mit fünf Käfigen und sechs Führungsstangen. Die Käfigplatten sind aufgabenbedingt unterschiedlich gestaltet. Die Führungsstangen sind auf einem gedachten Zylinder in etwa gleichen Abständen platziert. Zwei axial verschiebbare Käfigplatten sind mithilfe eines Aktuators derart miteinander verbunden, dass ihr Abstand zueinander verstellt werden kann. Die obere, dem Greiferflansch nähere der beiden axial beweglichen Käfigplatten ist mit dem Hauptaktuator verbunden, der im Flanschkäfig sitzt.

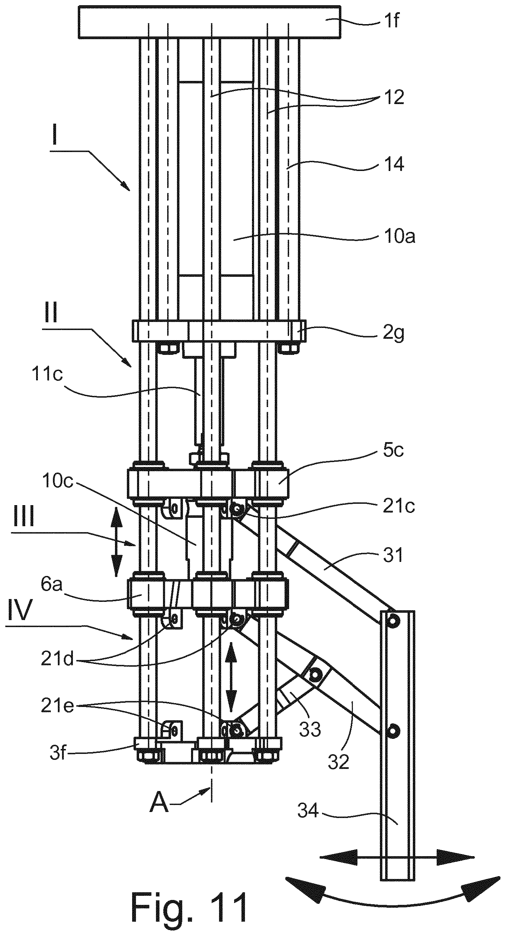

- Fig. 11: Seitenansicht des Greiferturms aus der Fig. 10 mit einem Fingermechanismus im halb geöffneten Zustand. Der Fingermechanismus besteht aus einem Greiferfinger, einer Kurbel, zwei Lenkern und einem axial beweglichen Käfig bestehend aus zwei beweglichen Käfigplatten als ein Schubgelenk.

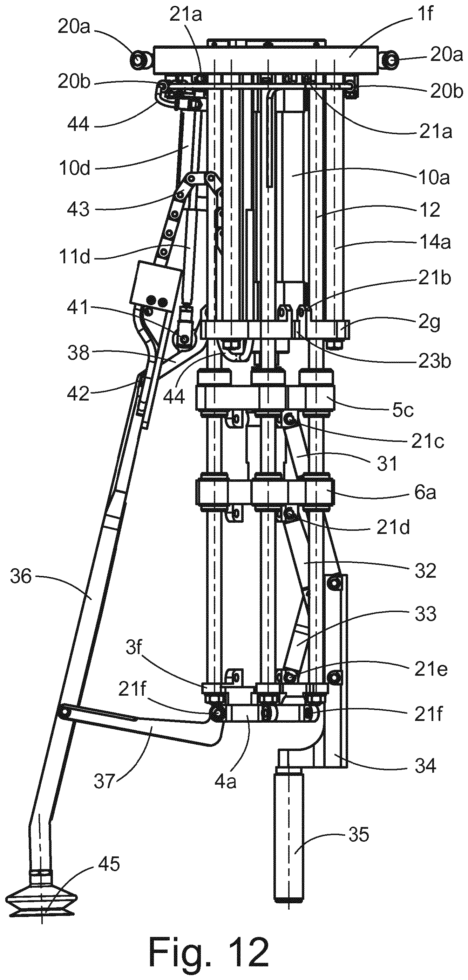

- Fig. 12: Seitenansicht einer Variante des Langarm-Greifmechanismus mit einem Fingermechanismus im geschlossenen Zustand und einem Saugmechanismus, Saugarm genannt, im ausgefahrenen Zustand.

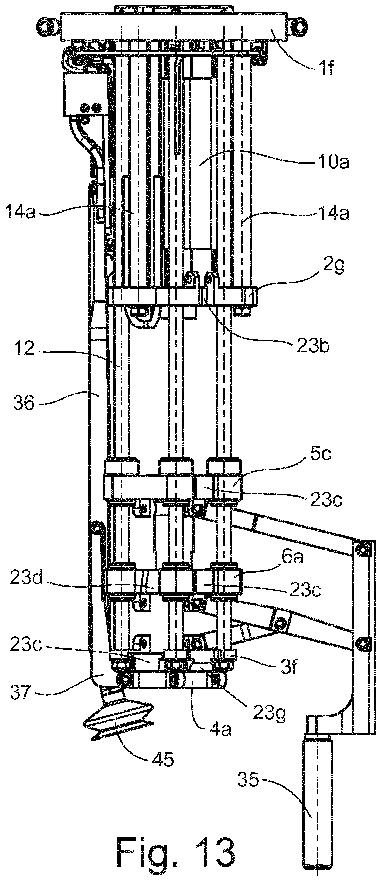

- Fig. 13: Seitenansicht der Variante des Langarm-Greifmechanismus gemäß Fig. 12 mit einem Fingermechanismus im geöffneten Zustand und einem Saugarm im eingefahrenen Zustand.

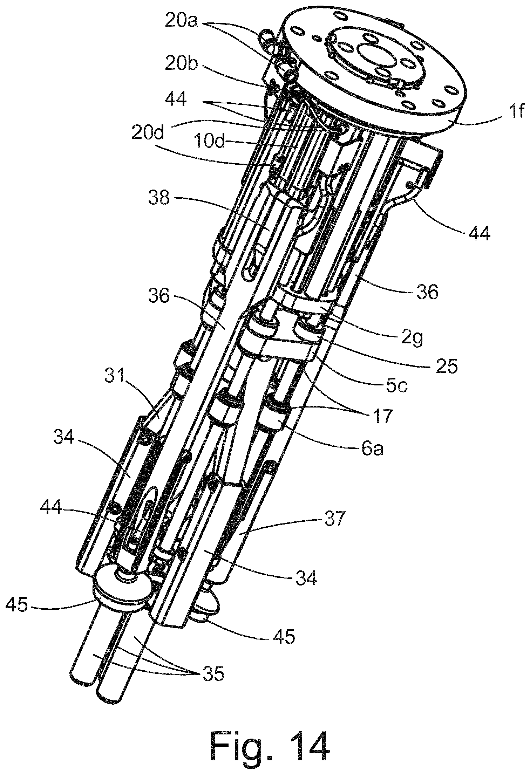

- Fig. 14: perspektivische Darstellung des Langarm-Greifmechanismus mit drei Fingermechanismen zum Greifen von Teilen und drei Saugarmen zum Ansaugen von flachen Teilen wie Papier, Pappe Kartons und dgl. Objekten. Der multifunktionale Langarm-Greifmechanismus bildet mit insgesamt sechs Greif- und Saugmechanismen und vier Aktuatoren im zusammengefahrenen Zustand einen sehr kompakten und schmalen zylindrischen Körper.

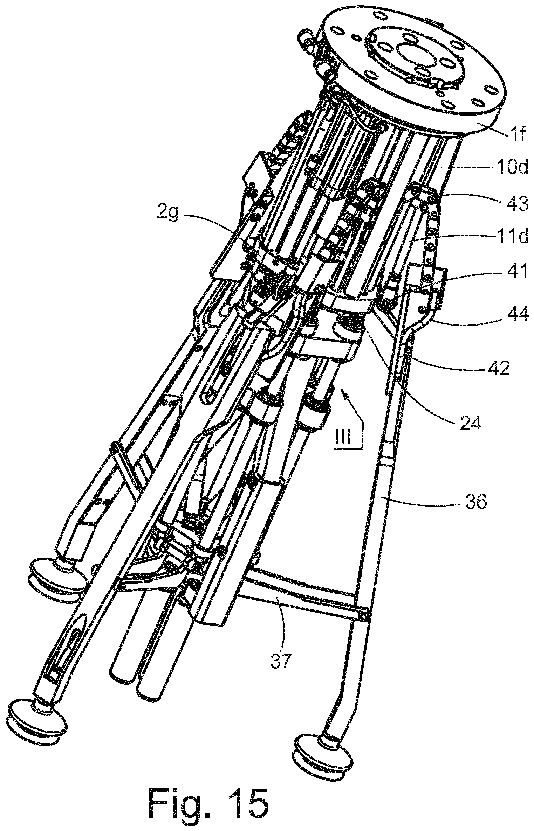

- Fig. 15: perspektivische Darstellung einer Variante des erfindungsgemäßen Langarm-Greifmechanismus mit drei geschlossenen Fingermechanismen und drei ausgefahrenen Saugarmen.

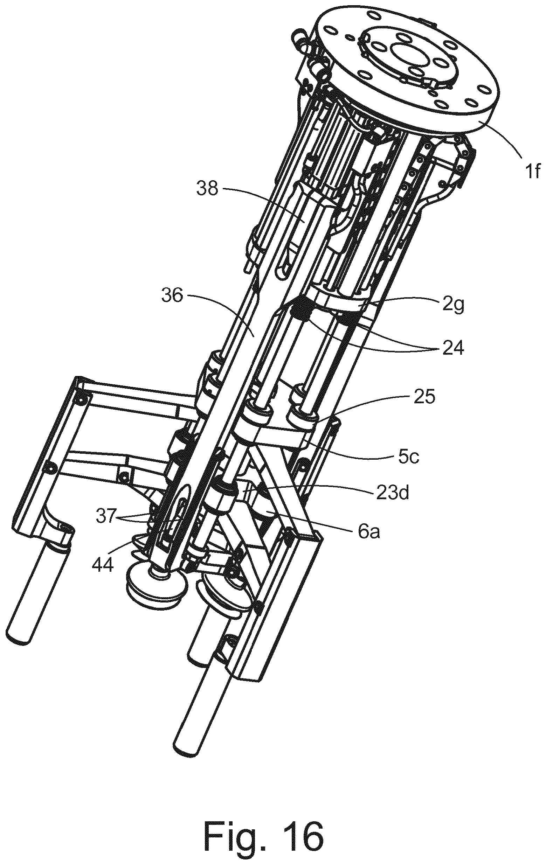

- Fig. 16: perspektivische Darstellung eines erfindungsgemäßen Langarm-Greifmechanismus mit drei geöffneten Fingermechanismen und drei eingefahrenen Saugarmen.

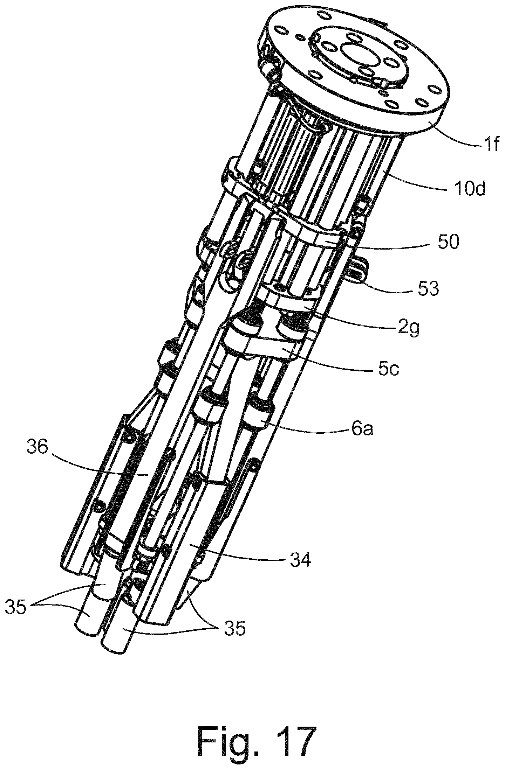

- Fig. 17: perspektivische Darstellung einer anderen Variante des erfindungsgemäßen Langarm-Greifmechanismus mit sechs Greiferfingern bestehend aus zwei Gruppen von je drei Fingermechanismen, die jeweils für eine andere Aufgabe vorgesehen sind. Drei geschlossene Fingermechanismen bewegen ihre Greiferfinger parallel und exakt geradlinig, während die restlichen drei geschlossenen Fingermechanismen ihre Greiferfinger einzeln oder synchronisiert auf einer Koppelkurve bewegen.

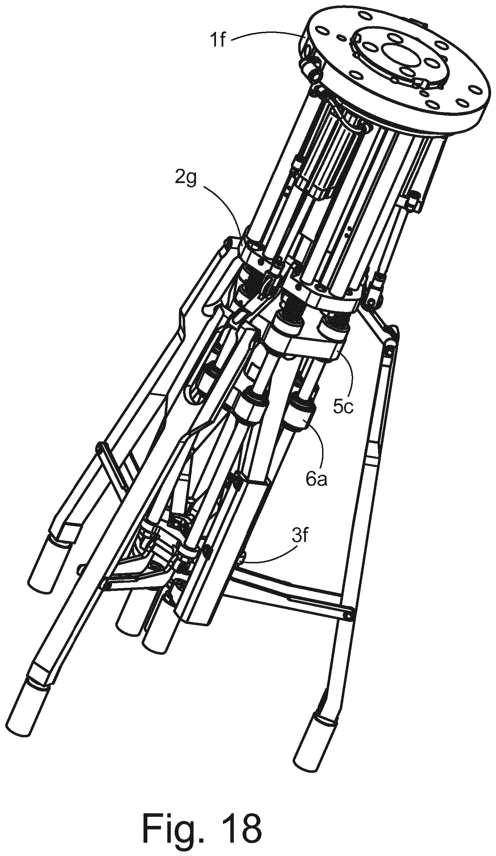

- Fig.18: die Variante des erfindungsgemäßen Langarm-Greifmechanismus gemäß Fig. 17. Die geradlinig parallel geführte Gruppe der Fingermechanismen ist zusammen gefahren, während die zweite Gruppe der Fingermechanismen sich im geöffneten Zustand befindet.

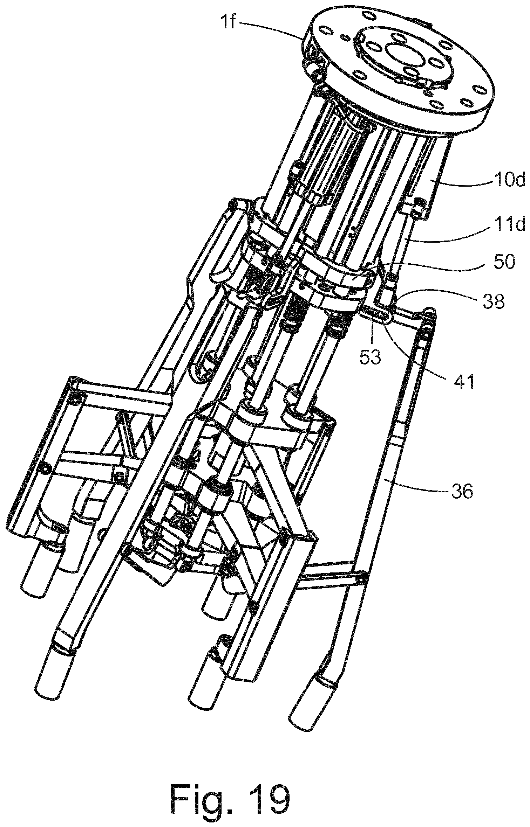

- Fig. 19: eine Variante des erfindungsgemäßen Langarm-Greifmechanismus mit sechs Fingermechanismen im geöffneten Zustand.

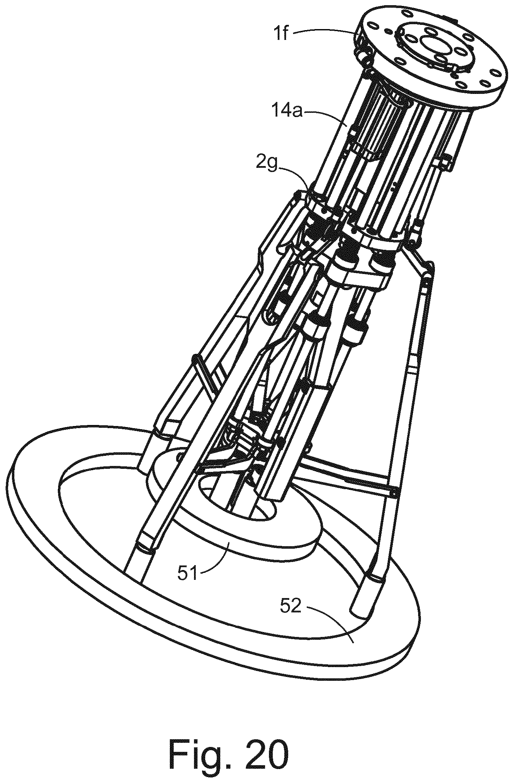

- Fig. 20: eine Variante des erfindungsgemäßen Langarm-Greifmechanismus mit sechs Fingermechanismen. Die erste Gruppe von drei Fingermechanismen ist zusammen gefahren, um ein Teil von innen zu greifen, während die zweite Gruppe von drei einzeln betätigten Fingermechanismen herausgefahren ist, um dasselbe biegeelastische Teil von außen zu greifen oder wie hier dargestellt, ein anderes Teil von innen oder von außen zu greifen.

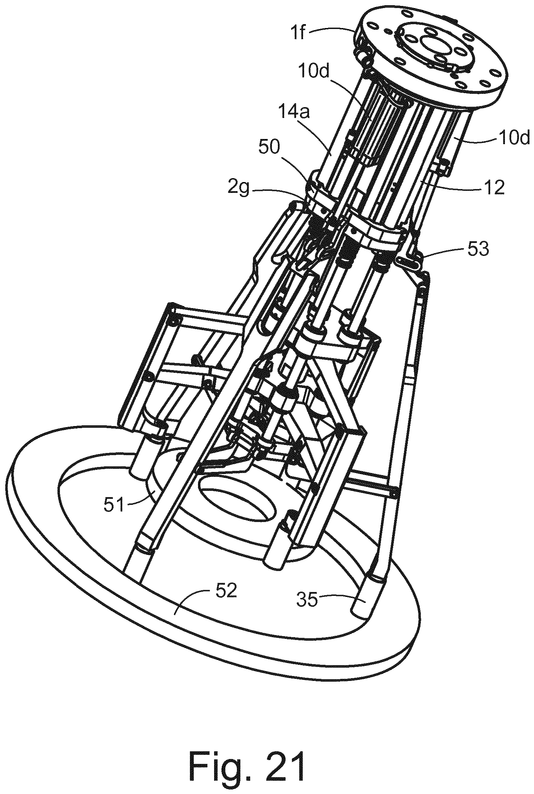

- Fig. 21: eine Variante des erfindungsgemäßen Langarm-Greifmechanismus mit sechs Fingermechanismen. Während die ersten drei Fingermechanismen ein rundes Objekt von außen greifen, greifen die anderen drei Fingermechanismen gleichzeitig oder nacheinander ein anderes Objekt von innen.

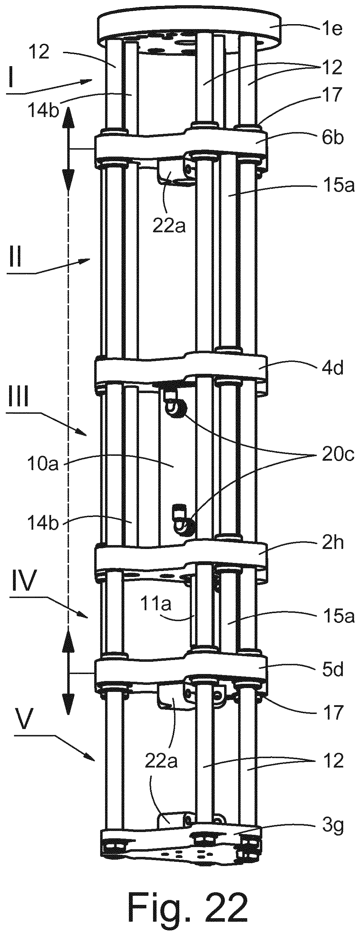

- Fig. 22: einen Greiferturm als Gestell einer anderen Variante des multifunktionalen Langarm-Greifmechanismus, bestehend aus einer runden Flanschplatte, fünf dreipassförmigen Käfigplatten und sechs Führungsstangen, die in dreimal doppelte Anordnung vom Flansch bis zur letzten Käfigplatte durchgehen. Vom Flansch aus betrachtet sind die erste und die vierte Käfigplatte mit Hilfe von drei zusätzlichen Stangen miteinander zu einem beweglichen Käfig verbunden. Dieser Käfig ist durch Linearlager auf den Führungsstangen axial verschiebbar gelagert und dient als Antrieb für viele Mechanismen des Greifers. Die dritte Käfigplatte ist mit Hilfe von drei weiteren Führungsstangen, die durch die zweite und erste Käfigplatte bis zum Flansch hindurchgehen, mit dem Flansch fest verbunden. Zwischen den zweiten und dritten Käfigplatten ist ein Aktuator platziert und mit den beiden Käfigplatten fest verbunden. Die Antriebsstange bzw. die Antriebswelle des Aktuators ist mit der vierten Käfigplatte befestigt und setzt diese in Bewegung.

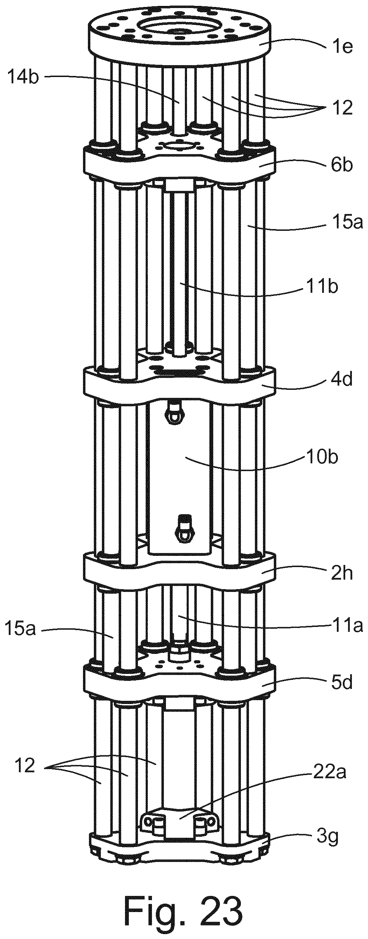

- Fig. 23: denselben Greiferturm aus der Figur 22 mit einem Aktuator, dessen Antriebsstange, Kolbenstange, Rotorwelle oder Spindeltrieb, sich von der ersten Käfigplatte durch die zweite, den Aktuator und die dritte Käfigplatte bis hin zur vierten Käfigplatte erstreckt. Während eine Hälfte der Antriebsstange für die Bewegung des Käfigs sorgt, wird die zweite Hälfte der Antriebsstange für ein Wegmesssystem und/oder ein Bremssystem verwendet.

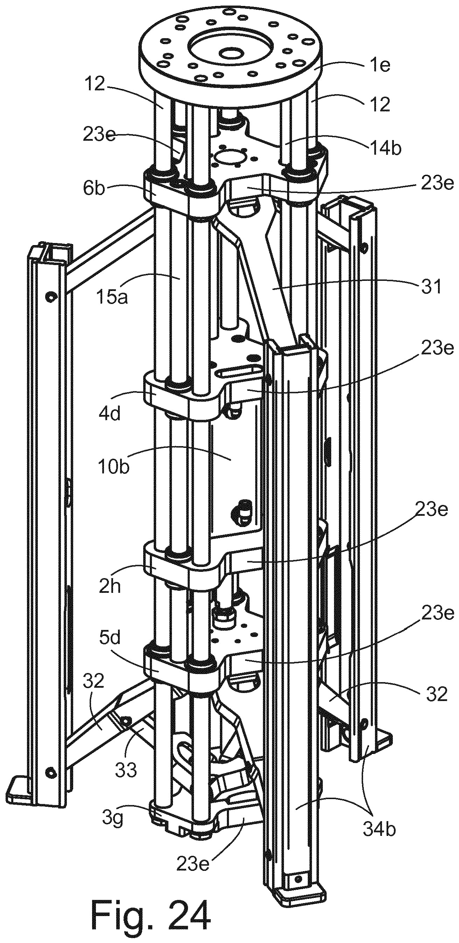

- Fig. 24: einen Dreifinger-Langarm-Greifmechanismus im halb geöffneten Zustand, dessen Greifergehäuse gemäß Figur 23 als ein schmaler Turm aufgebaut ist.

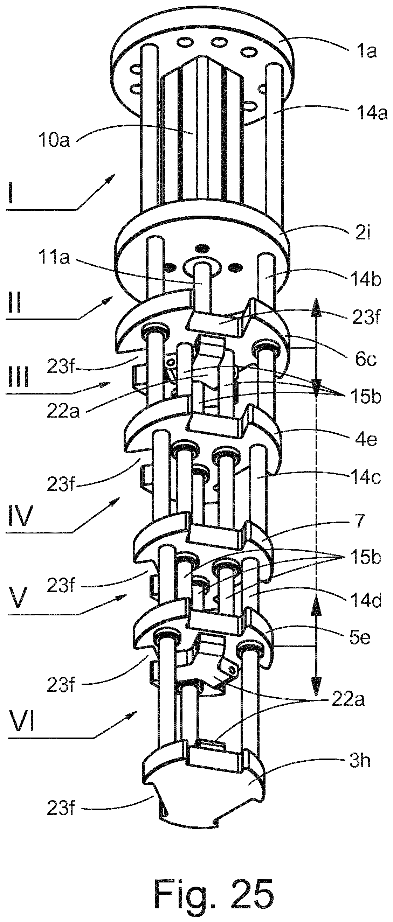

- Fig. 25: das Gehäuse eines multifunktionalen Langarm-Greifmechanismus in Form eines mehrstöckigen Turmes bestehend aus einem Flanschkäfig, drei auf dem Flanschkäfig aufbauenden und feststehenden Käfigen sowie einem beweglichen Käfig, mit zwei Käfigplatten, von denen die eine zwischen der ersten und der dritten Käfigplatte und die andere zwischen der vierten und der sechsten Käfigplatte platziert ist. Die feststehenden Käfige besitzen je drei Führungsstangen. Der bewegliche Käfig besitzt ebenfalls drei Führungsstangen, die durch die Linearlager der dritten und der vierten Käfigplatten geführt sind. Zusätzlich werden die beiden beweglichen Käfigplatten zwei und fünf durch Linearlager auf den Führungsstangen der feststehenden Käfige geführt. Die Käfigplatten besitzen sowohl Gelenkbohrungen oder Gelenklaschen zur Befestigung von Kurbeln, Lenkern, Greiferfingern und anderen Maschinenelementen als auch Aussparungen zwecks Unterbringung der ausfahrbaren Teile und Glieder des Greifmechanismus.

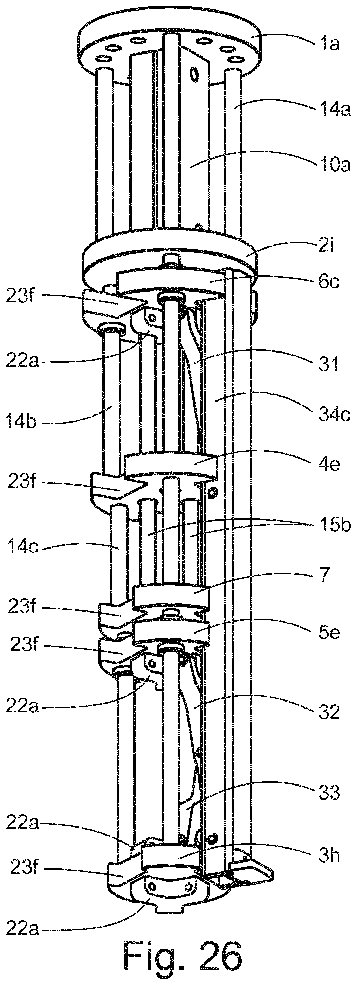

- Fig. 26: den Langarm-Greifmechanismus gemäß Fig. 25 mit einem sechsgliedrigen Fingermechanismus im zusammengefahrenen Zustand. Zwei Lenker des Fingermechanismus sind an den beiden synchron beweglichen Käfigplatten Nummer zwei und fünf drehgelenkig befestigt. Eine Kurbel verbindet den unteren Lenker drehgelenkig mit der sechsten Käfigplatte.

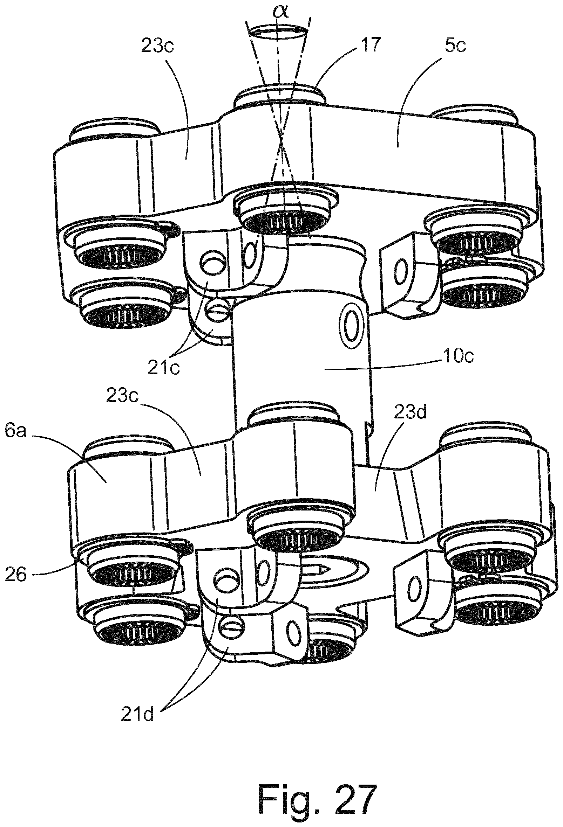

- Fig. 27: perspektivische Darstellung zweier beweglicher Käfigplatten, die miteinander axial verschiebbar verbunden sind. Der Abstand der beiden Käfigplatten lässt sich durch einen Aktuator wie zum Beispiel durch einen Pneumatik-Zylinder oder einen Elektromotor und Spindeltrieb verstellen. Beide Käfigplatten besitzen Linearlager, um auf den Führungsstangen zu gleiten und Befestigungslaschen mit Bohrungen zwecks gelenkiger Befestigung von Lenkern, Aktuatoren oder andere Maschinenelemente.

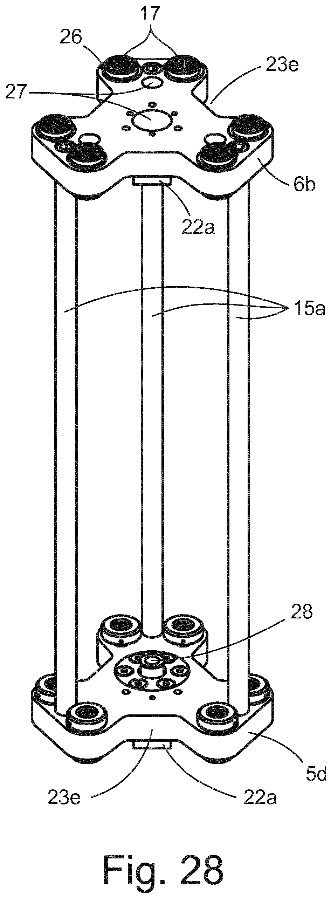

- Fig. 28: einen axial verschiebbaren Käfig bestehend aus zwei Käfigplatten mit Linearlagern und drei Führungsstangen, die die beiden Käfigplatten miteinander befestigen und auf Distanz halten. In der unteren Käfigplatte befindet sich eine seitlich verschiebbare Kupplung, die zur Befestigung eines Aktuators mit dem axial beweglichen Käfig dient.

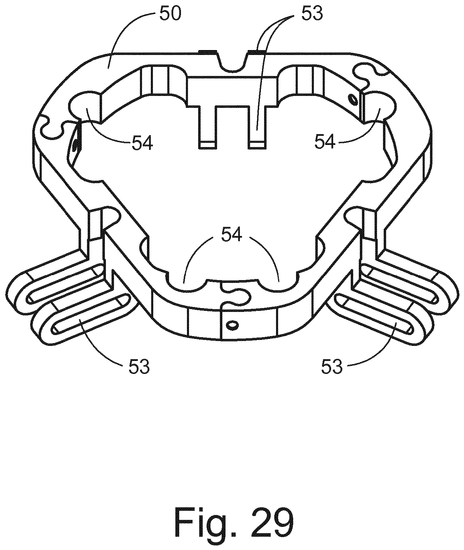

- Fig. 29: perspektivische Darstellung eines Synchronisationsringes für drei oder mehr rund um die Mittelachse (A) angeordnete Aktuatoren gemäß Figuren 19 und 21.

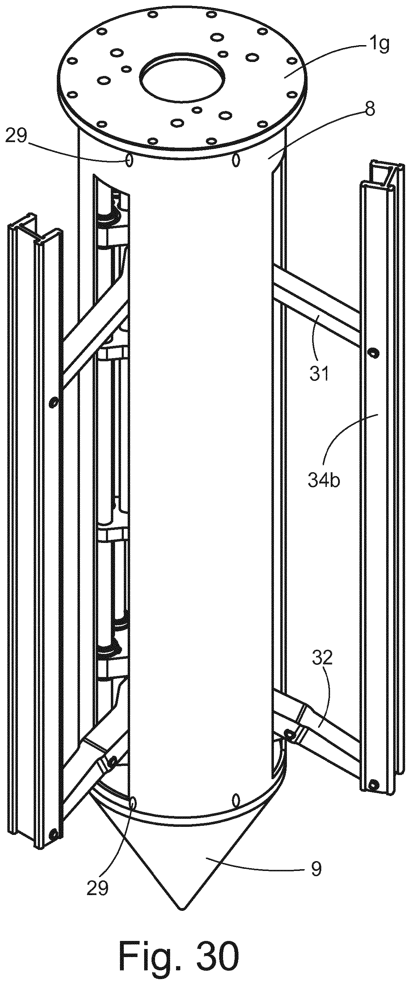

- Fig. 30: einen erfindungsgemäßen Langarm-Greifmechanismus mit einem Ummantelungsrohr, das an der Flanschplatte befestigt ist und mindestens eine der Käfigplatten, vorzugsweise die letzte, seitlich abstützt.

Identische Teile haben die gleiche Ziffer. Indizes mit Buchstaben kennzeichnen unterschiedliche Ausführungen oder unterschiedliche Größen desselben Elementes.

Gemäß Fig. 1 besitzt der Greifermechanismus bzw. multifunktionale Langarm-Greifmechanismus einen Flanschkäfig (I), der aus einer Flanschplatte (1), einer ersten Käfigplatte (2) und mehreren Stangen (12) oder Speichen, Drähten, Seilen oder Fäden (13) besteht. Zwischen den beiden Platten (1, 2) befindet sich ein Aktuator (10), ein Pneumatik-Zylinder oder ein Elektromotor, dessen Antriebsstange, Kolbenstange, Rotorwelle oder Spindelwelle (11) durch eine Bohrung in der Käfigplatte (2) hindurch in den nächsten Käfigraum hineinragt.

Die parallel zueinander und senkrecht auf die Käfigplatten stehenden Stangen (12) sind vorzugsweise rohrförmig hohl. Sie sind einerseits in die Flanschplatte eingesetzt und mit ihr fest verbunden und ragen andererseits durch entsprechende Bohrungen in der Käfigplatte (2) durch bis zur nächsten Käfigplatte hindurch.

Die sich kreuzenden Speichen, Drähte, Seile oder Fäden (13) sind zwischen den beiden Käfigplatten (1, 2) eingespannt. Sie verlaufen rechts und links schräg und parallel zueinander und beanspruchen das Gehäuse des Aktuators (10) auf Druck. Dadurch baut der Flanschkäfig (I) sehr leicht und sehr widerstandsfähig gegen Biegung und Torsion.

Gemäß Fig. 2 besteht der Greiferturm des Langarm-Greifmechanismus aus der Flanschplatte (1a), in die wie im Ausschnitt (B) dargestellt, drei Führungsstangen (12) in Teilbereichen (16) passgenau geführt eingesetzt und fest verschraubt sind. An der Flanschplatte (1a) ist ein Aktuator (10a) rückseitig befestigt. Der Aktuator ist an seiner Kopfseite mit einer ersten höhenverstellbaren Käfigplatte (2a) befestigt, durch deren geschlitzte (19) Bohrungen die Führungsstangen (12) hindurch ragen und mithilfe der Befestigungsschrauben (18) festgeklemmt werden. An der ersten Käfigplatte (2a) ist ein Befestigungselement für Gelenke (22a) angebracht. An dieses und an andere Befestigungselemente für Gelenke, die in der Regel an den Käfigplatten angebracht sind, werden Aktuatoren, Lenker, Kurbeln, Greiferfinger, Saugarme und andere Maschinenelemente fest oder drehgelenkig befestigt. Der bewegliche Teil des Aktuators, die Kolbenstange, Motorwelle oder die Spindelwelle (11a) hängt frei im Raum. Am Ende der Führungsstangen ist eine zweite Käfigplatte (3a) mit einem weiteren Befestigungselement für Gelenke (22a) angebracht und mit Schrauben befestigt. Der so entstandene Greiferturm besteht aus zwei oder mehreren übereinander angeordneten Käfigen (I, II) mit je drei oder mehr Stangen (12) als Säulen und bildet als Gestell den Arm und das Gehäuse eines biege- und torsionssteifen langarmigen und multifunktionalen Greifmechanismus, bei dem alle Teile einschließlich Greiferfinger, Saugarme, Magnetarme und deren Aktuatoren im zusammengefahrenen Zustand innerhalb des Greiferturmes Platz finden. Hierfür besitzen die Käfigplatten (2a, 3a) zwischen den Führungsstangen Aussparungen (23a), die näher zur Mittelachse des Greiferturmes sind als die Führungsstangen.

Gemäß Fig. 3 befindet sich die erste Käfigplatte mit dem Aktuator (10a) in etwa der Mitte der langen Führungsstangen (12). Dadurch bleibt im ersten Käfig (I) viel Platz zur Unterbringung anderer Teile des Greifmechanismus. Die erste Käfigplatte (2a) hält die Führungsstangen (12) auf Distanz zueinander und versteift sie gegen Biegung und Knickung. Sie ist in der Höhe verstellbar. Bei höherem Greiferturm werden mehrere höhenverstellbare Käfigplatten die Stangen (12) auf Distanz halten.

Gemäß Fig. 4 befinden sich unterhalb und oberhalb der feststehenden Käfigplatte (2a) je eine axial bewegliche Käfigplatte (5a, 6a) mit je einem Befestigungselement für Gelenke (22a). In den Käfigplatten (5a, 6a) befinden sich Linearlager (17), durch die die Käfigplatten über die Führungsstangen gleiten. Der Aktuator (10b) besitzt eine durchgehende Antriebsstange (11a, 11b), die mit den beiden axial beweglichen Käfigplatten (5a, 6a) befestigt ist und diese antreibt. Die beweglichen Käfigplatten (5a, 6a) stabilisieren und verstärken mit ihren Linearlagern (17) zusätzlich den langen Greiferturm gegen Biegung und Torsion und dienen darüber hinaus mit ihren Befestigungselementen für Gelenke (22a) als Antrieb für Lenker, Kurbeln und andere Maschinenelemente oder Mechanismen des Langarm-Greifmechanismus. Alle Käfigplatten (2a, 3a, 5a, 6a) besitzen Aussparungen (23a), die zur Aufnahme der beweglichen Teile des Greifmechanismus dienen.

Gemäß Fig. 5 sind vier Führungsstangen (12) in den Flansch (1b) eingesetzt. Entsprechend sind die Käfigplatten (2b, 3b) und die mit ihnen verbundenen Befestigungselemente für Gelenke (22b) viereckförmig gestaltet. Die Greiferfinger, Saug- und Magnetarme sowie andere Maschinenelemente und Mechanismen finden ihren Platz zwischen den Führungsstangen (12) und fahren von dort aus zwecks Erfüllung ihrer Aufgaben an den Führungsstangen vorbei hinaus.

Gemäß Fig. 6 bilden vier Doppelstangen (12), von der Mittelachse des Greiferturmes radial nach außen zweimal viereckförmig konzentrisch angeordnet, einen zweistöckigen Greiferturm als Gestell des Langarm-Greifmechanismus. Der Aktuator (10a) bildet gemeinsam mit der Flanschplatte (1c) und der Käfigplatte (2c) den Flanschkäfig (I). Die Käfigplatte (2c) kann auch mit oder ohne den Aktuator mithilfe der Schrauben (18) von den Führungsstangen (12) gelöst, tiefer geschoben und erneut befestigt werden, wenn die Aufgabe dies erfordert.

Gemäß Fig. 7 bilden drei Doppelstangen (12), die von der Mittelachse (A) der Flanschplatte (1d) radial nach außen doppelt und dreieckförmig angeordnet sind, den Greiferturm als Gestell des Langarm-Greifmechanismus.

Gemäß Fig. 8 befindet sich der Aktuator (10a) im Flanschkäfig, eingespannt zwischen der Flanschplatte (1d) und der Käfigplatte (2d). Die Antriebsstange, Rotorwelle oder Spindelwelle (11a) treibt die axial bewegliche Käfigplatte (5b) auf den Führungsstangen (12) auf und ab. In der Käfigplatte (5b) befinden sich Linearlager, Gleit- oder Wälzlagerlager (17), die das Gleiten der beweglichen Käfigplatte auf den Führungsstangen erleichtern und den Führungsstangen durch eine größere Lagerbreite bzw. Lagerhöhe eine längere Führung ermöglichen, ohne die Käfigplatte dicker und schwerer machen zu müssen. Die bewegliche Käfigplatte dient als Antrieb der sich am Greifmechanismus befindenden Fingermechanismen, Saug- und Magnetarme und andere beweglichen Teile.

Gemäß Fig. 9 sind sechs Führungsstangen (12) paarweise nebeneinander um ca. 120° auf einem Teilkreis verteilt. Die Flanschplatte (1e) ist rund. Die weiteren Käfigplatten (2e, 3e) erhalten die Form eines Dreipasses innerhalb des Flanschkreises mit Aussparungen zur Aufnahme von anderen Maschinenteilen. Befestigungselemente für Gelenke (22a) ergänzen die Käfigplatten ein- oder beidseitig.

Gemäß Fig. 10 besteht der Greiferturm aus fünf übereinander angeordneten Käfigen (I, II, III, IV und V). Von der Flanschplatte (1f) gehen vier Führungsstangen (14a), die auch hohl sein können, bis zur feststehenden Käfigplatte (2g) und werden mit dieser befestigt. Weitere volle oder hohle Führungsstangen (12) sind in die Flanschplatte eingesetzt und mit ihr befestigt. Die Führungsstangen (12) gehen durch die Linearlager (17) der beweglichen Käfigplatten (5c und 6a) hindurch und werden mit der feststehenden Käfigplatte (3f) befestigt. In den feststehenden Käfigplatten (3f) und (4a) befinden sich gegenüberliegende Bohrungen, in denen sich Stifte als Abstandhalter befinden. Die beiden feststehenden Käfigplatten (3f, 4a) sind fest miteinander verbunden. Sie bilden ebenfalls einen geschlossenen Käfig mit geringem Abstand.

An allen Käfigplatten sind Laschen mit Bohrungen als Befestigungselemente für Gelenke (21a bis 21f) zur gelenkigen Verbindung von Lenkern, Kurbeln, Koppeln und Antriebselementen vorgesehen. Alle Käfigplatten besitzen Aussparungen (23b, 23d) zwischen den Stangen, Speichen, Seilen und Drähten, die der Aufnahme von Lenkern, Kurbeln und andere bewegliche Komponenten des Greifmechanismus dienen. Die Käfigplatten sind in der Regel sternförmig und bestehen aus Wabenkonstruktionen, die am günstigsten durch 3-D-DruckVerfahren gefertigt werden. Sie besitzen nur dort Material, wo ein Funktionsteil wie ein Lager gehalten werden soll oder wo ein Kraftvektor wirkt.

Der Hauptantrieb (10a) sitzt im Flanschkäfig (I) und betätigt mittels Verlängerungsrohres (11c) die erste axial bewegliche Käfigplatte (5c). Die erste bewegliche Käfigplatte (5c) ist durch den kleineren Aktuator (10c) mit der zweiten beweglichen Käfigplatte (6a) verbunden. Der kleine Aktuator (10c) verstellt bei Bedarf den Abstand zwischen den beiden beweglichen Käfigplatten (5c, 6a) und variiert somit den Abstand zwischen den an ihnen befindlichen Gelenkpunkten der Lenker der Fingermechanismen bzw. Magnetkopf- und Saugmechanismen. Dadurch kann der Langarm-Greifmechanismus seinen Greiferfingern, Saug- und Magnetarmen während der Handhabungsarbeit zusätzlich zum Öffnen und Schließen eine zweite Bewegungsmöglichkeit verleiten. Die Greiferfinger bzw. Saug- und Magnetarme können somit während der Bewegung zusätzlich nach innen oder nach außen geschwenkt werden.

Die Flanschplatte und auch andere Käfigplatten besitzen Anschluss- und Durchgangsbohrungen (20a, 20b, 20c) und Schnittstellen für Energie- Stoff- und Signalleitungen.

Gemäß Fig. 11 ist ein Fingermechanismus (31, 32, 33, 34) an den Befestigungselementen der Gelenke (21c, 21d, 21e) der Käfigplatten (5c, 6a, 3f) drehbar angebracht. Der Aktuator (10a) ist durch das Verlängerungsglied (11c) mit dem beweglichen Käfig (III) befestigt und schiebt ihn auf den Führungsstangen (12) auf und ab. Der Käfig (III) ist der Schieber und das Antriebsglied des sechsgliedrigen Fingermechanismus (12, III, 31, 32, 33, 34). Die beiden Käfigplatten (5c, 6a) des Käfigs (III) sind durch einen Aktuator (10c) miteinander verbunden. Die synchrone Bewegung der Käfigplatten (5c, 6a) öffnet und schließt der Greiferfinger (34) parallel oder schwenkend. Ändert sich der Abstand zwischen den Gelenken (21c, 21d) durch den Aktuator (10c), so neigt sich der Greiferfinger zur Greiferachse (A) hin oder weg von ihr.

Gemäß Fig. 12 befindet sich am Greiferturm ein Fingermechanismus (31, 32, 33, 34) mit einer nach innen gekröpften runden Greiferbacke (35). Dieser Fingermechanismus wird durch den im Flanschkäfig untergebrachten Aktuator (10a) betätigt. Diesem Finger gegenüber sitzt am Greiferturm ein weiterer Mechanismus, eine Kurbelschwinge (12, 36, 37, 38) mit einem Saugnapf (45) an ihrer Koppel (36). Der kleine Aktuator (10d) ist am Gelenk (21a) der Flanschplatte (1f) befestigt und greift mit seiner Antriebsstange oder -welle (11d) am Gelenk (41) der Kurbel (38) an und fährt den Sauger aus dem Greiferturm hinaus und wieder herein.

Die Gelenke (21b, 21c, 21d, 21e) am Greiferturm sind innerhalb der Käfige so eng beieinander angeordnet, dass die Greiferfinger (34, 36) beim Zusammenfahren sich zwischen den Führungsstangen (12) innerhalb eines Zylinders um die Führungsstangen begeben. Dabei gehen die Kurbeln und Lenker teilweise ineinander und in die Greiferfinger hinein.

Vom Saugnapf (45) verläuft ein Vakuumschlauch (44) durch den Saugarm (36) nach oben, anschließend durch die Energiekette (43) nach unten durch die Käfigplatte (2g) und wieder nach oben zum Anschluss (20b) an der Unterseite der Flanschplatte (1f). Der Anschluss (20b) ist durch Bohrungen innerhalb der Flanschplatte an den externen Anschluss (20a) an der Umfangseite der Flanschplatte verbunden.

Gemäß Fig. 13 hat der rechte Fingermechanismus seine runde Greiferbacke (35) parallel und exakt geradlinig geöffnet, während der linke Mechanismus mit dem Saugnapf (45) sich in eine Strecklage begeben und sich senkrecht und ganz eng zwischen den Führungsstangen (12, 14a) in die Aussparungen (23b, 23c, 23d, 23g) der Käfigplatten begeben hat.

Gemäß Fig. 14 bildet der Langarm-Greifmechanismus selbst mit insgesamt sechs Finger- und Saugmechanismen im komplett zusammen gefahrenen Zustand einen schmalen zylindrischen Körper, der biege- und torsionssteif ist. Die drei runden Greifbacken (35) werden synchron über den beweglichen Käfig (III) durch den Aktuator (10a) angetrieben, der mitten im Flanschkäfig platziert ist. Die Mechanismen der Saugnäpfe besitzen jeweils ihren eigenen Aktuatoren (10d), die bei Bedarf über einen zusätzlichen Ring (50) miteinander synchronisiert werden. Der Lenker (32) und die Kurbel (33) gehen beim Zusammenfahren in den Greiferfinger (34) hinein. Bei dem Saugmechanismus bildet die Kurbel (38) im zusammengefahrenen Zustand mit der Koppel (36) und der Schwinge (37) eine gerade Linie parallel zur Greiferlängsachse (A). Sie gehen teilweise ineinander und ganz nahe an die Streck- und Decklage. Die Schutzkappe (25) beinhaltet einen Abstreifer in einem hohlzylindrischen Körper. Sie schützt das Linearlager gegen Schmutz und äußere mechanische Einwirkungen.

Gemäß Fig. 15 können an so einem Greiferturm mehrere unterschiedliche Mechanismen für unterschiedliche Aufgaben angebracht werden. Hier sind drei Fingermechanismen zusammen gefahren und drei Saugmechanismen ganz herausgefahren. Die Mechanismen können einzeln, gruppenweise oder alle gemeinsam angetrieben werden. Über dem beweglichen Käfig (III) sind auf den Führungsstangen (12) Druckfeder (24) platziert, die den Mechanismen beim Hinausfahren aus ihrer eingefahrenen Position in der Deck- und Strecklage helfen, den Weg nach außen zu finden. Die Versorgungsleitungen der Energie oder des Vakuums (44) verlaufen von der Flanschplatte (1f) zuerst innerhalb des Flanschkäfigs nach unten, durchqueren die Käfigplatte (2g), machen eine 180° Kehrtwende und verlaufen von dort durch die Energiekette (43) und Bohrungen der Koppel (36) bis zum Saugnapf oder Magnetkopf.

Gemäß Fig. 16 sind drei Saugmechanismen zusammengefahren und die drei Fingermechanismen mit geradliniger Fingerbewegung weitestgehend geöffnet. Die Kappen (25) schützen die Lager (17) unter anderem vor Beschädigung durch die Feder (24).

Gemäß Fig. 17 sind zwei Gruppen von je drei unterschiedliche Fingermechanismen am Greiferturm vorhanden. Alle sechs Greiferfinger besitzen runde zylinderförmige Greifbacken (35). Alle sechs Fingermechanismen befinden sich im geschlossenen Zustand und bilden einen kompakten und langen zylindrischen Körper.

Gemäß Fig. 18 ist die Gruppe der drei Mechanismen mit paralleler und geradliniger Fingerbewegung geschlossen, während die zweite Gruppe der drei Mechanismen mit annähernd kreisförmiger Bewegung ihrer Greifbacken geöffnet ist. Je nach Bedarf und Aufgabe können anhand der geometrischen Abmessungen dieser Mechanismen dafür gesorgt werden, dass die Greifbacken gruppenweise in einer Ebene oder in unterschiedlichen Ebenen liegen, um unterschiedliche Teile gleichzeitig oder nacheinander zu greifen bzw. abzusetzen.

Gemäß Fig. 19 besitzt der Langarm-Greifmechanismus zwei Gruppen von je drei Fingermechanismen, beide befinden sich im ausgefahrenen, d.h. im geöffneten Zustand. Der Antrieb der drei Mechanismen mit paralleler und geradliniger Fingerbewegung erfolgt synchron durch einen Aktuator über die axiale Bewegung eines Käfigs. Die anderen drei Mechanismen besitzen je einen eigenen Aktuator (10d) als Antrieb. Ihre Fingerbewegung kann einzeln erfolgen oder wie hier dargestellt über den Synchronisationsring (50) miteinander synchronisiert werden. Der Synchronisationsring (50) besitzt an seinem Umfang radiale Kulissen (53), in denen der Gelenkbolzen (41) des Drehgelenkes zwischen der Antriebsstange (11d) und der Kurbel (38) als ein Schubgelenk geführt ist. Der Synchronisationsring gleitet wie eine axial bewegliche Käfigplatte über den Führungsstangen (12, 14a). Er kann auch als ein beweglicher Käfig ausgeführt werden.

Fig. 20 zeigt den Langarm-Greifmechanismus mit zwei Gruppen von je drei Fingermechanismen. Die erste Gruppe von Mechanismen mit paralleler und geradliniger Fingerbewegung hat ein ringförmiges Greifobjekt (51) von innen gegriffen, es mithilfe des Roboters über ein zweites, etwas größeres ringförmiges Greifobjekt (52) gebracht, um es anschließend mit der zweiten Gruppe von Fingermechanismen wie hier dargestellt von innen oder von außen zu greifen und anschließend gemeinsam woanders abzulegen.

Fig. 21 zeigt den gleichen Vorgang wie in Fig. 20 beschrieben, jedoch greift die erste Gruppe von Fingermechanismen diesmal das kleinere Greifobjekt (51) von außen und die zweite Gruppe der Fingermechanismen bewegt ihre Greifbacken (35) durch die Aktuatoren (10d) mithilfe des Synchronisationsringes (50) synchron zueinander.

Gemäß Fig. 22 besteht der Greiferturm eines Langarm-Greifmechanismus aus fünf übereinander angeordneten Käfigen (I, II, III, IV, V). Sechs Führungsstangen (12) gehen von der Flanschplatte (1e) durch die fünf Käfige bis zu der untersten Käfigplatte (3g) durch alle anderen Käfigplatten hindurch. Die Käfigplatte (2h) ist mit drei Führungsstangen (14b) mit der Flanschplatte (1e) verbunden. Der Aktuator (10a) ist zwischen den feststehenden Käfigplatten (2h, 4d) eingespannt. Gemeinsam verstärken sie den Greiferturm. Zwei weitere axial bewegliche Käfigplatten (5d, 6b) sind mit drei zusätzlichen Führungsstangen (15a) miteinander verbunden und bilden gemeinsam einen beweglichen Käfig (II+ III+ IV). Der bewegliche Käfig wird durch die Antriebsstange (11a) oder Antriebswelle des Aktuators (10a) axial auf und ab bewegt. Auch der bewegliche Käfig verstärkt den Greiferturm zusätzlich. Er dient seinerseits als Antriebsglied der Finger-, Saug- oder Magnetkopfmechanismen. Die beweglichen Käfigplatten (5d, 6b) und die feststehende Käfigplatte (3g) besitzen ein- oder beidseitig Befestigungselemente für Gelenke (22a).

Gemäß Fig. 23 befindet sich zwischen den feststehenden Käfigplatten (2h, 4d) ein Aktuator (10b) mit durchgehender Antriebsstange bzw. Antriebswelle (11a, 11b). Die zweite Hälfte der Antriebsstange bzw. Antriebswelle dient für ein Wegmesssystem und/oder Not-Aus-Bremssystem, um den Langarm-Greifmechanismus programmierbar zu machen und dafür zu sorgen, dass der Greifmechanismus bei Energieausfall das Greifobjekt nicht verliert.

Gemäß Fig. 24 befinden sich drei sehr lange Greiferfinger (34b) am Greiferturm des Langarm-Greifmechanismus mit fünf Käfigen. Die Kurbel (33) ist an der feststehenden Käfigplatte (3g) befestigt, während die beiden Lenker (31, 32) sich an den Käfigplatten (5d, 6b) des bewegten Käfigs befinden. Beim Zusammenfahren und Schließen der Fingermechanismen gehen die Greiferfinger (34b) in die Aussparungen (23e) der Käfigplatten zwischen den Führungsstangen (12) hinein und bilden mit den dreipassförmigen Käfigplatten einen zylindrischen Körper, dessen Umfangkreis nicht größer ist als der Umkreis um die Führungsstangen (12). Bei noch länger werdenden Greiferfingern, z.B. mehrere Meter lang, erhält der bewegliche Käfig mehrere Käfigplatten, an denen sich weitere Lenker parallel und analog zu den beiden vorhandenen Lenkern (31, 32) angelenkt sind und den langen Finger (34b) mitunterstützen.

Gemäß Fig. 25 besteht der Greiferturm des multifunktionalen Langarm-Greifmechanismus aus sechs Käfigen (I bis VI), die beginnend mit der Flanschplatte (1a) pyramidenförmig aufeinander aufbauen. Die Käfigplatten besitzen Aussparungen (23f) zur Aufnahme von Fingermechanismen und andere Mechanismen. Die Käfigplatten (5e, 6c) sind mit drei Führungsstangen (15b) miteinander zu einem Käfig (III, IV, V) innerhalb anderer Käfige verbunden und auf den Führungsstangen (14b, 14d) axial verschiebbar angeordnet. Der Aktuator (10a) treibt den beweglichen Käfig durch seine Antriebsstange oder -welle (11a), die an der Käfigplatte (6c) befestigt ist, an. Befestigungselemente für Gelenke (22a) ergänzen die Käfigplatten für feststehende oder axial verschiebbare Drehgelenke.

Gemäß Fig. 26 befindet sich ein Fingermechanismus im geschlossenen Zustand am Greiferturm des Langarm-Greifmechanismus in Figur 25. Die Kurbel (33) ist am oberen Befestigungselement (22a) der untersten Käfigplatte (3h) gelenkig befestigt. Der untere Lenker (32) ist am unteren Befestigungselement (22a) der beweglichen Käfigplatte (5e) und der obere Lenker (31) am unteren Befestigungselement (22a) der beweglichen Käfigplatte (6c) drehbar angebracht. Durch die Abwärtsbewegung des beweglichen Käfigs (III, IV, V) mittels des Aktuators (10a) geht der Greiferfinger (34c) auf und umgekehrt zu.

Gemäß Fig. 27 wird der bewegliche Käfig (III) in den Figuren (10 bis 21) aus den Käfigstangen (12) und den beweglichen Käfigplatten (5c, 6a) gebildet, deren Abstand zueinander durch den Aktuator (10c) verändert werden kann. Beide Käfigplatten (5c, 6a) besitzen Bohrungen zur Aufnahme von Linearlagern (17), mit deren Hilfe sie besser auf den Käfigstangen oder Seilen gleiten und ihre Lagerachsen sich bei Bedarf den Achsen der Käfigstangen, gerade oder schräg, in einem gewissen Winkelbereich (α) rundherum anpassen lassen. Beide Käfigplatten (5c, 6a) besitzen Befestigungslaschen mit Gelenkbohrungen (21c, 21d) zur gelenkigen Verbindung der Lenker (31, 32) der Fingermechanismen oder anderer Mechanismen. Die Käfigplatten (5c, 6a) sind gegeneinander drehbar und mit dem Aktuator (10c) bzw. seiner Antriebsstange oder -welle befestigt. Die Linearlager (17) sind in ihren Bohrungen mit Hilfe von Sicherungsringen (26) gegen axiale Verschiebung gesichert.

Gemäß Fig. 28 bilden zwei oder mehrere axial bewegliche Käfigplatten (5d, 6b), die durch Führungsstangen (15a) miteinander befestigt sind, einen axial beweglichen Käfig. Die Käfigplatten besitzen Bohrungen zum Einsetzen von Linearlagern (17) und anderen Bohrungen (27) zwecks Durchführung von zusätzlichen Führungsstangen und Antriebsstangen oder Antriebswellen. Die Käfigplatte (5d) besitzt ein seitlich zweidimensional bewegliches und rotationsfähiges Kupplungselement (28), das der Befestigung der Antriebsstange bzw. der Antriebswelle (11a) mit der Käfigplatte (5d) für axiale Bewegung dient.

Gemäß Fig. 29 besteht der Synchronisationsring (50) aus drei Teilen, die vorzugsweise aus einem Kunststoff mit guter Gleiteigenschaft wie Polyamid in 3D-Druckverfahren hergestellt, ineinander gesteckt und zusammen verstiftet oder verschraubt sind. Er gleitet durch seine Halbrundungen (54) über die Stangen (12, 14a) und besitzt je nach Anzahl der zu synchronisierenden Aktuatoren radial vom Zentrum nach außen verlaufende Kulissen (53). In den hier als drei Doppelkulissen ausgeführten Langlöchern (53) verlaufen die Stifte oder Lagerbolzen (41) der Verbindung der Aktuatoren (10d) mit den Mechanismen. Der Synchronisationsring (50) wird nur bei Bedarf von außen an die Käfigstangen angesetzt. Daher bestehen die Lagerstellen jeweils als halbe Lagerschalen (54).

Gemäß Fig. 30 steckt der gesamte Greiferturm des Langarm-Greifmechanismus in einem aufgeschlitzten Rohr (8), das mit der Flanschplatte (1g) verstiftet und verschraubt ist. Die feststehenden Käfigplatten, insbesondere die untersten, stützen sich an die Innenwandung des Rohres, unterstützen und verstärken zusätzlich zu den Stangen den Greiferturm durch die Steifigkeit des Rohres (8). Eine Endkappe (9) schließt das offene Rohr und hält die letzte Käfigplatte seitlich fest. Die Mechanismen des Langarm-Greifmechanismus kommen aus ihrer Parkposition durch die Schlitze des Rohres heraus, erledigen ihre Arbeit und fahren wieder zurück in das Rohr. Ein gummielastischer Überzug, nicht dargestellt, deckt den gesamten Langarm-Greifmechanismus zu und macht ihn für den Einsatz in Reinräumen, Chemikalienbereich und Unterwassereinsatz tauglich.

Ein derart konzipierter Langarm-Greifmechanismus baut schlank und ist multifunktional und besonders geeignet für Montage und Handhabung sowie Greifen in die Ecken von tiefen Bohrungen, Kisten und Kartonagen.

Die in der Beschreibung, den Zeichnungen und den Ansprüchen offenbarten Merkmale der Erfindung können sowohl einzeln als auch in beliebiger Kombination für die Verwirklichung der Erfindung von Bedeutung sein.

### Alle offenbarten Merkmale sind erfindungswesentlich.

### Verwendete Begriffe und Bezugsnummer:

Flansch, Greiferflansch, Flanschplatte, Flanschkäfig
Feststehende und bewegliche Käfige
Käfigplatten
Stangen, Speichen, Drähte, Seile und Fäden
Turm, Greiferturm
Aktuator, Pneumatik- oder Hydraulik-Zylinder, Elektromotor,
Antriebsstange: Kolbenstange, Antriebswelle oder Spindelwelle Dreipassförmig
Kurbelschwinge: Gestell (Stange), Kurbel, Koppel, Schwinge
Schubkurbelgetriebe: Gestell (Stange), Schieber, Koppel, Kurbel oder Schwinge Greifer, Greifbacke, Greiferfinger
Greifmechanismus:
   Fingermechanismus
   Saugmechanismus
   Magnetkopfmechanismus
Linearlager = Gleit- oder Wälzlager für lineare Bewegung

### Bezugsbezeichnungen:

- 1: Die Flanschplatte = die erste Käfigplatte
- 2: Zweite feststehende Käfigplatte
- 3: Dritte feststehende Käfigplatte
- 4: Vierte feststehende Käfigplatte
- 5: Bewegliche Käfigplatte, verbunden mit einem Aktuator
- 6: Bewegliche Käfigplatte, verbunden direkt oder indirekt mit einem Aktuator
- 7: Feststehende Käfigplatte
- 8: Das Ummantelungsrohr
- 9: Die Rohrkappe
- 10: Aktuator, Pneumatikzylinder oder Elektromotor
- 11: Beweglicher Teil des Aktuators, Kolbenstange oder Spindelwelle
- 12: Lange feststehende Stange oder Rohr
- 13: Speiche, Draht, Seil oder Faden
- 14: Kurze feststehende Stange oder Rohr
- 15: Bewegliche Stange oder Rohr
- 16: In den Käfigplatten eingesetzter Teil der Stangen (früher der Kurzhubzylinder)
- 17: Linearlager
- 18: Befestigungsschraube
- 19: Der Befestigungsschlitz der Nabe einer feststehenden Käfigplatte
- 20: Druckluftanschlüsse
- 21: Gefräste Befestigungselemente für Gelenke an der Flanschplatte (frühere Verschraubung am Flanschumfang)
- 22: Separate Befestigungselemente für Gelenke (frühere Verschraubung unterhalb der Flanschplatte)
- 23: Aussparungen der Käfigplatten (früher: Befestigungslaschen unterhalb des Flansches.
- 24: Druckfeder (Gelenk 21b an der feststehenden Käfigplatte 2)
- 25: Schutzkappe der Linearlager
- 26: Sicherungsring (früher: Gelenk 21c an der beweglichen Käfigplatte 5c)
- 27: Bohrung in der Käfigplatte 6b für die Antriebsstange, (früher Nr. 48)
- 28: Kupplung der Antriebsstange in der Käfigplatte 5d (früher: Gelenk 21d an der beweglichen Käfigplatte 6a)
- 29: Stifte oder Schrauben (früher: Gelenk 21e an der beweglichen Käfigplatte 3f)
- 30: Frei geworden (Gelenk 21f an der Käfigplatte 4a)
- 31: Hinterer Lenker des Fingermechanismus
- 32: Vorderer Lenker des Fingermechanismus
- 33: Kurbel des Fingermechanismus
- 34: Greiferfinger des Fingermechanismus
- 35: Runde Greifbacke
- 36: Koppel als Saug- oder Magnetarm
- 37: Schwinge des Saug- oder Magnetarmes
- 38: Kurbel des Saug- oder Magnetarmes
- 41: Gelenk zwischen dem Antriebsglied (11d) und der Kurbel (38)
- 42: Gelenk zwischen der Kurbel (38) und der Koppel (36)
- 43: Energiekette
- 44: Versorgungsleitungen der Energie
- 45: Saugnapf

- 50: Synchronisationsring oder -käfig
- 51: Kleiner Ring als Greifobjekt
- 52: Größerer Ring als Greifobjekt
- 53: Radiale Kulisse (Langloch)

## Patentansprüche

1. Greifmechanismus für Roboter, Maschinen und Handhabungsgeräte mit einem Arm und wenigstens einem beweglichen Greiferfinger, der mit einem anderen feststehenden oder beweglichen Greiferfinger zusammenwirkt, **dadurch gekennzeichnet,**
**dass** das Gehäuse des Greifmechanismus sich in Form eines schlanken und mehrstöckigen Turmes in Sandwichbauweise aus mindestens zwei über dem Greiferflansch aufbauenden Käfigen (I, II) mit zwei feststehenden Käfigplatten (2a, 3a) zusammensetzt, die durch Stangen, Speichen, Seile und/oder Drähte auf Distanz gehalten werden und
**dass** sich die Aktuatoren und alle beweglichen Teile des Greifers im eingefahrenen Zustand größtenteils innerhalb der Käfige befinden.

2. Greifmechanismus nach Anspruch 1, **dadurch gekennzeichnet,**
**dass** aktive und/oder passive Maschinenelemente wie Aktuatoren oder Druck erzeugende Elemente wie Gewindetriebe, Pneumatik- oder Hydraulikzylinder (10a), Rohre und Stangen zwischen den Käfigplatten (1, 2) eingespannt werden.

3. Greifmechanismus nach Anspruch 1, **dadurch gekennzeichnet,**
**dass** sich an den Käfigplatten Aussparungen (23) befinden, in die sich die beweglichen Glieder der Finger-, Saug-, Magnetkopf- und/oder andere Mechanismen beim Zusammenfahren hinein begeben.

4. Greifmechanismus nach Anspruch 1, **dadurch gekennzeichnet,**
**dass** sich nahe dem Zentrum der Käfigplatten Befestigungselemente für Gelenke befinden, an denen bewegliche Teile der Mechanismen befestigt werden.

5. Greifmechanismus nach Anspruch 1, **dadurch gekennzeichnet,**
**dass** feststehende Käfigplatten (2a) höhenverstellbar sind.

6. Greifmechanismus nach Anspruch 1, **dadurch gekennzeichnet,**
**dass** mindestens eine Käfigplatte (5b) auf den Führungsstangen (12) axial verschiebbar ist.

7. Greifmechanismus nach Anspruch 1, **dadurch gekennzeichnet,**
**dass** mindestens ein Käfig bestehend aus mindestens zwei beweglichen Käfigplatten (5d, 6b) auf den Führungsstangen (12) axial verschiebbar ist.

8. Greifmechanismus nach Anspruch 6 oder 7, **dadurch gekennzeichnet,**
**dass** eine bewegliche Käfigplatte oder ein beweglicher Käfig als Antrieb von Greiferfingern, Saug- oder Magnetarme oder andere Mechanismen dient.

9. Greifmechanismus nach Anspruch 6 oder 7, **dadurch gekennzeichnet,**
**dass** ein axial beweglicher Ring (50) oder eine axial bewegliche Käfigplatte (5c, 6a) oder ein verschiebbarer Käfig als Synchronisationsglied der Bewegung mindestens zweier Mechanismen dient.

## Claims

1. Gripping mechanism for robots, machines and handling equipment with one arm and at least one movable gripper finger, acting together in a coordinated manner with another fixed or movable gripper finger, **characterized by**
the case of the gripping mechanism in form of a slim and multi-stage tower in sandwich construction, composed of at least two cages (I and II) above the gripper flange, with two fixed cage plates (2a and 3a), with their mutual distance being maintained by rods, spokes, ropes and/or wires and
the fact that actuators and all movable parts of the gripper are mainly located within the cages, when in retracted state.

2. Gripping mechanism acc. to claim 1, **characterized by**
the fact that active and/or passive machine elements like actuators or pressure generating elements like screw drives, pneumatic or hydraulic cylinders (10a), tubes and rods are clamped between cage plates (1 and 2).

3. Gripping mechanism acc. to claim 1, **characterized by**
the presence of cut outs (23) at the cage plates, into which the movable elements of finger, suction, magnetic head and/or other mechanisms return during retraction.

4. Gripping mechanism acc. to claim 1, **characterized by**,
the presence of fasteners for joints, located close to the center of the cage plates, intended for attachment of movable components of the mechanisms.

5. Gripping mechanism acc. to claim 1, **characterized by**
height adjustability of fixed cage plates (2a).

6. Gripping mechanism acc. to claim 1, **characterized by**
axially sliding motion of at least one cage plate (5b) on the guide rods (12).

7. Gripping mechanism acc. to claim 1, **characterized by**
axially sliding motion of at least one cage composed of at least two movable cage plates (5d and 6b) on the guide rods (12).

8. Gripping mechanism acc. to claims 6 or 7, **characterized by**
the fact that a movable cage plate or a movable cage is used as drive for gripper fingers, suction or magnet arms or other mechanisms.

9. Gripping mechanism acc. to claims 6 or 7, **characterized by**
the fact that an axially movable ring (50) or an axially movable cage plate (5c and 6a) or a slidable cage is used as synchronizing element for the motion of at least two mechanisms.

## Revendications

1. Mécanisme de préhension pour robots, machines et appareils de manutention avec un bras et au moins un doigt de préhension mobile, qui coopère avec un autre doigt de préhension fixe ou mobile,
**caractérisé en ce que**
le boîtier du mécanisme de préhension est composé d'au moins deux cages (I, II) montées sur la bride de préhension avec deux plaques de cage (2a, 3a) fixes sous la forme d'une tour mince et multiétagée en construction en sandwich, qui sont maintenues à distance par des barres, des rayons, des câbles et/ou des fils, et
**en ce que** les actionneurs et toutes les pièces mobiles du système de préhension se trouvent à l'état rentré en grande partie à l'intérieur des cages.

2. Mécanisme de préhension selon la revendication 1, **caractérisé en ce que** les éléments de machine actifs et/ou passifs, comme les actionneurs ou les éléments générant de la pression comme les mécanismes de transmission à vis, les vérins pneumatiques ou hydrauliques (10a), les tuyaux et les barres, sont serrés entre les plaques de cage (1, 2).

3. Mécanisme de préhension selon la revendication 1, **caractérisé en ce que** des évidements (23) se trouvent sur les plaques de cage dans lesquels viennent se placer, lors du rapprochement, les organes mobiles des mécanismes de doigt, d'aspiration, à tête magnétique et/ou d'autres mécanismes.

4. Mécanisme de préhension selon la revendication 1, **caractérisé en ce que** des éléments de fixation pour articulations se trouvent proches du centre des plaques de cage, sur lesquels sont fixées les pièces mobiles des mécanismes.

5. Mécanisme de préhension selon la revendication 1, **caractérisé en ce que** des plaques de cage fixes (2a) peuvent être réglées en hauteur.

6. Mécanisme de préhension selon la revendication 1, **caractérisé en ce qu'**au moins une plaque de cage (5b) est axialement déplaçable sur les barres de guidage (12).

7. Mécanisme de préhension selon la revendication 1, **caractérisé en ce qu'**au moins une cage composée d'au moins deux plaques de cage mobiles (5d, 6b) est axialement déplaçable sur les barres de guidage (12).

8. Mécanisme de préhension selon la revendication 6 ou 7, **caractérisé en ce qu'**une plaque de cage mobile ou une cage mobile sert d'entraînement des doigts de préhension, des bras d'aspiration ou magnétiques ou d'autres mécanismes.

9. Mécanisme de préhension selon la revendication 6 ou 7, **caractérisé en ce qu'**une bague axialement mobile (50) ou une plaque de cage axialement mobile (5c, 6a) ou une cage pouvant être déplacée sert d'organe de synchronisation de mouvement d'au moins deux mécanismes.
